# EUROPEAN PATENT SPECIFICATION

(11) **EP 4 582 502 B1**
(45) Date of publication and mention of the grant of the patent: **03.06.2026**
(21) Application number: 23860016.7
(22) Date of filing: 10.08.2023
(51) Int. Cl.: C09D 11/38, B41J 2/01, B41M 5/00, C09D 11/101, C09D 11/322, C09D 11/324

(54) **INKJET INK AND INKJET RECORDING METHOD**
TINTENSTRAHLTINTE UND TINTENSTRAHLAUFZEICHNUNGSVERFAHREN
ENCRE POUR IMPRESSION JET D'ENCRE ET PROCÉDÉ D'IMPRESSION JET D'ENCRE

(30) Priority: 31.08.2022 JP 2022138407
(43) Date of publication of application: 09.07.2025
(73) Proprietor: FUJIFILM Corporation, Tokyo 106-8620 (JP)
(72) Inventor: TAKESHITA, Kohei, Ashigarakami-gun, Kanagawa 258-8577 (JP); SEKINE, Shinichiro, Ashigarakami-gun, Kanagawa 258-8577 (JP); FUJINO, Yuuta, Ashigarakami-gun, Kanagawa 258-8577 (JP); SUZUKI, Shota, Ashigarakami-gun, Kanagawa 258-8577 (JP); ARAKI, Kenjiro, Ashigarakami-gun, Kanagawa 258-8577 (JP)
(74) Representative: Klunker IP Patentanwälte PartG mbB
(86) International application number: PCT/JP2023/029307
(87) International publication number: WO 2024/048251

(56) References cited:
- WO-A1-2018/042916
- WO-A1-2022/070556
- JP-A- 2012 149 228

## Description

### BACKGROUND OF THE INVENTION

### 1. Field of the Invention

The present disclosure relates to an inkjet ink and an ink jet recording method.

### 2. Description of the Related Art

In the related art, various studies have been conducted on an ink jet ink and an ink jet recording method.

For example, JP6584677B discloses an ink jet ink composition containing water, a chain-like polymer which includes a specific structural unit (1), a specific structural unit (2), and a hydrophilic group, and particles including a polymerizable group.

In addition, JP6047904B discloses an ink jet recording method including a first step of jetting and landing a liquid droplet of a photocurable ink composition containing a solvent, a polymerizable compound, and a photopolymerization initiator from a head toward a recording medium, in which the polymerizable compound is a particle dispersed in the solvent, to form an image; a second step of evaporating the solvent contained in the photocurable ink composition constituting an image; and a third step of irradiating the image after the second step with light, in which in a case of starting the irradiation in the third step, a content of the polymerizable compound contained in the photocurable ink composition constituting the image after the second step is 20% to 90% by mass with respect to the total mass of the ink composition. Further related art represents documents WO2022/070556 A1, JP2012149228 A and WO2018/042916 A1.

### SUMMARY OF THE INVENTION

However, in the related art, it has been difficult to achieve both rub resistance and stretchability of an image in an image recorded material obtained by an ink jet recording system.

The present disclosure has been made in view of such circumstances, and an object to be achieved by an embodiment of the present invention is to provide an ink jet ink and an ink jet recording method, in which an image having excellent rub resistance and stretchability can be recorded.

According to the present disclosure, it is possible to provide an ink jet ink and an ink jet recording method, in which an image having excellent rub resistance and stretchability can be recorded.

### DESCRIPTION OF THE PREFERRED EMBODIMENTS

In the present disclosure, a numerical range indicated using "to" means a range including numerical values described before and after "to" as a minimum value and a maximum value, respectively.

In the present disclosure, in a case where a plurality of substances corresponding to each component in a composition is present, the amount of each component in the composition means the total amount of the plurality of substances present in the composition, unless otherwise specified.

In a numerical range described in a stepwise manner in the present disclosure, an upper limit value or a lower limit value described in a certain numerical range may be replaced with an upper limit value or a lower limit value in another numerical range described in a stepwise manner, or may be replaced with values shown in Examples.

In the present disclosure, the term "step" includes not only the independent step but also a step in which intended purposes are achieved even in a case where the step cannot be precisely distinguished from other steps.

In the present disclosure, "*" in a chemical formula represents a bonding position.

In the present disclosure, a concept of "image" includes not only a pattern image (for example, a character, a symbol, or a figure) but also a solid image.

In the present disclosure, "light" is a concept including active energy rays such as γ-rays, β-rays, electron beams, ultraviolet rays, and visible rays.

In the present disclosure, ultraviolet rays may be referred to as "ultraviolet (UV) light".

In the present disclosure, light generated from a light emitting diode (LED) light source may be referred to as "LED light".

In the present disclosure, "(meth)acrylic acid" has a concept including both acrylic acid and a methacrylic acid, "(meth)acrylate" has a concept including both acrylate and methacrylate, and "(meth)acryloyl group" has a concept including both acryloyl group and methacryloyl group.

### [Ink jet ink]

The ink jet ink (hereinafter, also simply referred to as "ink") according to the present disclosure contains water and particles which contain a polymer P having an acid group and a polymerizable compound A, in which the polymerizable compound A has two or more ethylenically unsaturated groups in one molecule, and has a weight-average molecular weight of 1,000 or more.

By using the ink according to the present disclosure, it is possible to record an image having excellent rub resistance and stretchability. The reason why such an effect is exhibited is presumed as follows.

In image recording in which an ink jet ink containing water and particles containing a polymer and a polymerizable compound is landed on a base material, and the landed ink is cured by irradiation with active energy rays and/or application of heat to obtain an image, it is difficult to achieve both rub resistance and stretchability.

In a case where a polymerizable compound having two or more ethylenically unsaturated groups in one molecule is contained, it is considered that polymerization proceeds by irradiation and/or application of active energy rays, a three-dimensional network is formed, a strength of an ink film to be formed is increased, and the rub resistance is improved. However, in the related art, in a case where the strength of the ink film to be formed is increased, the ink film is less likely to follow deformation of the base material, and the stretchability tends to decrease. On the other hand, in the ink according to the present disclosure, since the weight-average molecular weight of the polymerizable compound A contained in the particles is 1,000 or more, a network in which a distance between crosslinking points is long is formed, and thus it is considered that the ink film easily follows the deformation of the base material, and the stretchability is obtained. That is, by using the ink according to the present disclosure, both the rub resistance and the stretchability are achieved.

On the other hand, JP6584677B discloses only particles containing a polymerizable monomer having a low molecular weight, and does not focus on achieving both the rub resistance and the stretchability. JP6047904B does not disclose particles containing a polymerizable compound, and the technical ideas are different from those of the present disclosure.

Hereinafter, each component contained in the ink according to the present disclosure will be described in detail.

### <Water>

The ink according to the present disclosure contains water.

A content of water with respect to the total amount of the ink according to the present disclosure can be, for example, 10% by mass or more and 99% by mass or less.

The content of the water with respect to the total amount of the ink according to the present disclosure is preferably 10% by mass or more, more preferably 20% by mass or more, still more preferably 30% by mass or more, and particularly preferably 50% by mass or more.

The upper limit of the content of the water with respect to the total amount of the ink according to the present disclosure is appropriately determined according to contents of other components, and is, for example, 99% by mass, preferably 95% by mass and more preferably 90% by mass.

### <Particles>

The ink according to the present disclosure contains at least one kind of particles containing the polymer P and the polymerizable compound A (hereinafter, also referred to as "specific particles").

In the ink according to the present disclosure, the fact that the polymer P and the polymerizable compound A are contained in the specific particles contributes to storage stability of the ink.

A preferred aspect of the ink according to the present disclosure is an aspect in which the polymerizable compound A remains in the specific particles of the ink before being applied onto the base material, and the polymerizable compound A bleeds out from the specific particles of the ink applied onto the base material.

### (Polymerizable compound A)

The specific particles contain at least one polymerizable compound A having two or more ethylenically unsaturated groups in one molecule and having a weight-average molecular weight of 1,000 or more. Hereinafter, the polymerizable compound having two or more ethylenically unsaturated groups in one molecule and having a weight-average molecular weight of 1,000 or more is also simply referred to as "polymerizable compound A".

In the ink according to the present disclosure, the fact that the polymerizable compound A has two or more ethylenically unsaturated groups in one molecule contributes to the rub resistance of the image, and the fact that the weight-average molecular weight of the polymerizable compound A is 1,000 or more contributes to the stretchability of the image.

In the present disclosure, the weight-average molecular weight (Mw) means a value measured by gel permeation chromatography (GPC).

In the measurement by GPC, HLC (registered trademark)-8020GPC (Tosoh Corporation) is used as a measuring device, three columns of TSKgel (registered trademark) Super Multipore HZ-H (4.6 mmID x 15 cm, Tosoh Corporation) are used as a column, and tetrahydrofuran (THF) is used as an eluent. In addition, as the measurement conditions, a sample concentration of 0.45% by mass, a flow rate of 0.35 ml/min, a sample injection amount of 10 µL, and a measurement temperature of 40°C are set, and a RI detector is used.

The calibration curve is created from eight samples of "Standard sample TSK standard, polystyrene" manufactured by Tosoh Corporation: "F-40", "F-20", "F-4", "F-1", "A-5000", "A-2500", "A-1000", and "n-propylbenzene".

The weight-average molecular weight of the polymerizable compound A is 1,000 or more, preferably 1,500 or more, and more preferably 2,000 or more. On the other hand, the upper limit value of the weight-average molecular weight of the polymerizable compound A is not particularly limited, but from the viewpoint of dispersion stability, it is preferably 20,000 or less, and more preferably 15,000 or less. The weight-average molecular weight of the polymerizable compound A may be in a range of 1,000 to 20,000.

Examples of the ethylenically unsaturated group contained in the polymerizable compound A include a (meth)acryloyl group, a vinyl group, a vinyl ester group, and a vinyl ether group. From the viewpoint of reactivity, the ethylenically unsaturated group is preferably a (meth)acryloyl group or a vinyl group, and more preferably a (meth)acryloyl group. Examples of the (meth)acryloyl group include a (meth)acryloyloxy group and a (meth)acrylamide group. Among these, from the viewpoint of further improving the rub resistance of the image, the ethylenically unsaturated group is preferably a (meth)acryloyl group, more preferably an acryloyl group, and still more preferably an acryloyloxy group.

In the ink according to the present disclosure, from the viewpoint of obtaining an image having excellent stretchability, in the polymerizable compound A, it is preferable that two or more ethylenically unsaturated groups contained in one molecule are present at positions separated from each other, and the polymerizable compound A may have two or more ethylenically unsaturated groups including two ethylenically unsaturated groups bonded to both terminals of the molecule.

The number of ethylenically unsaturated groups contained in the polymerizable compound A is not particularly limited as long as it is 2 or more. The upper limit value of the number of ethylenically unsaturated groups is not particularly limited, but is, for example, 20. From the viewpoint of ease of synthesis, the number of ethylenically unsaturated groups is preferably 2, 3, 6, 9, 10, 15, or 20.

In addition, from the viewpoint of further improving the rub resistance of the image, the polymerizable compound A is preferably a urethane (meth)acrylate having two or more (meth)acryloyl groups in one molecule.

The urethane (meth)acrylate is a compound having a (meth)acryloyl group and having a urethane bond. In a case where the polymerizable compound A contains a urethane bond, it is considered that the rub resistance of the image is improved because adhesiveness to the base material is improved. In addition, it is considered that the strength of the ink film is improved by a hydrogen bond between the urethane bonds, and as a result, the rub resistance of the image is improved.

The urethane (meth)acrylate can be produced, for example, by reacting a bifunctional isocyanate compound with a hydroxyl group-containing (meth)acrylate and, in some cases, a polyol.

Examples of the bifunctional isocyanate compound include aliphatic diisocyanates such as methylene diisocyanate, dimethylene diisocyanate, trimethylene diisocyanate, tetramethylene diisocyanate, pentamethylene diisocyanate, hexamethylene diisocyanate, dipropyl ether diisocyanate, 2,2-dimethylpentane diisocyanate, 3-methoxyhexane diisocyanate, octamethylene diisocyanate, 2,2,4-trimethylpentane diisocyanate, nonamethylene diisocyanate, decamethylene diisocyanate, 3-butoxyhexane diisocyanate, 1,4-butylene glycol dipropyl ether diisocyanate, and thiodihexyl diisocyanate; aromatic diisocyanates such as m-phenylene diisocyanate, p-phenylene diisocyanate, 2,4-tolylene diisocyanate, 2,6-tolylene diisocyanate, dimethylbenzene diisocyanate, ethylbenzene diisocyanate, isopropylbenzene diisocyanate, tolidine diisocyanate, 1,4-naphthalene diisocyanate, 1,5-naphthalene diisocyanate, 2,6-naphthalene diisocyanate, 2,7-naphthalene diisocyanate, metaxylylene diisocyanate, paraxylylene diisocyanate, and tetramethylxylylene diisocyanate; and alicyclic diisocyanates such as hydrogenated xylylene diisocyanate, isophorone diisocyanate, and dicyclohexylmethane 4,4'-diisocyanate.

Examples of the hydroxyl group-containing (meth)acrylate include 2-hydroxyethyl (meth)acrylate, 3-hydroxypropyl (meth)acrylate, 2-hydroxypropyl (meth)acrylate, 2-hydroxybutyl (meth)acrylate, 3-hydroxybutyl (meth)acrylate, 4-hydroxybutyl (meth)acrylate, phenylglycidyl ether (meth)acrylate, pentaerythritol (meth)acrylate, and dipentaerythritol penta(meth)acrylate.

In a preferred aspect, the polymerizable compound A includes a polymerizable compound A1 having six or more ethylenically unsaturated groups in one molecule. Hereinafter, the polymerizable compound having six or more ethylenically unsaturated groups in one molecule is also simply referred to as "polymerizable compound A1". In a case where the specific particles contain the polymerizable compound A1, the crosslinking density is further improved by polymerization, and the rub resistance of the image is improved.

The number of ethylenically unsaturated groups contained in the polymerizable compound A1 is not particularly limited as long as it is 6 or more, but from the viewpoint of further improving the rub resistance of the image, it is more preferably 10 or more. The upper limit value of the number of ethylenically unsaturated groups is not particularly limited, but is, for example, 20.

A preferred aspect of the ethylenically unsaturated group contained in the polymerizable compound A1 is the same as the preferred aspect of the ethylenically unsaturated group contained in the polymerizable compound A. That is, the ethylenically unsaturated group contained in the polymerizable compound A1 is preferably a (meth)acryloyl group, more preferably an acryloyl group, and still more preferably an acryloyloxy group.

In addition, in another preferred aspect, the polymerizable compound A includes a polymerizable compound A2 having two or three ethylenically unsaturated groups in one molecule and having a weight-average molecular weight of 2,000 or more. Hereinafter, the polymerizable compound having two or three ethylenically unsaturated groups in one molecule and having a weight-average molecular weight of 2,000 or more is also simply referred to as "polymerizable compound A2". In a case where the specific particles contain the polymerizable compound A2, a network in which the distance between crosslinking points is longer is formed, and thus the ink film easily follows the deformation of the base material, and the stretchability is further improved.

A preferred aspect of the ethylenically unsaturated group contained in the polymerizable compound A2 is the same as the preferred aspect of the ethylenically unsaturated group contained in the polymerizable compound A. That is, the ethylenically unsaturated group contained in the polymerizable compound A2 is preferably a (meth)acryloyl group, more preferably an acryloyl group, and still more preferably an acryloyloxy group.

The weight-average molecular weight of the polymerizable compound A2 is 2,000 or more, preferably 4,000 or more, and more preferably 10,000 or more. On the other hand, the upper limit value of the polymerizable compound A2 is not particularly limited, but from the viewpoint of dispersion stability, it is preferably 30,000 or less, and more preferably 20,000 or less.

In addition, the number of ethylenically unsaturated groups contained in the polymerizable compound A2 is preferably 2.

Specifically, it is preferable that the polymerizable compound A2 has two ethylenically unsaturated groups in one molecule and has a weight-average molecular weight of 4,000 or more. In a case where the number of ethylenically unsaturated groups is 2 and the weight-average molecular weight is 4,000 or more, both the rub resistance and the stretchability of the image can be improved.

From the above-described viewpoint, it is preferable that the polymerizable compound A includes the polymerizable compound A1 and the polymerizable compound A2. It is considered that the polymerizable compound A1 mainly contributes to the rub resistance of the image, and the polymerizable compound A2 mainly contributes to the stretchability of the image.

In a case where the polymerizable compound A includes the polymerizable compound A1 and the polymerizable compound A2, from the viewpoint of achieving both the rub resistance and the stretchability of the image, a ratio of the content of the polymerizable compound A1 to the total content of the polymerizable compound A1 and the polymerizable compound A2 is preferably 0.2 to 0.8 and more preferably 0.3 to 0.7.

The content of the polymerizable compound A in the ink according to the present disclosure is preferably 1% by mass to 15% by mass and more preferably 2% by mass to 8% by mass with respect to the total amount of the ink.

### (Polymerizable compound B)

It is preferable that the specific particles further contain a monofunctional polymerizable compound having a ring structure. The monofunctional polymerizable compound having a ring structure is also simply referred to as "polymerizable compound B".

The ring structure contained in the polymerizable compound B may be an alicyclic structure or an aromatic ring structure. From the viewpoint of improving jettability while maintaining the rub resistance, the ring structure is preferably an aromatic ring structure.

Examples of the alicyclic structure include a cyclohexane ring structure, a dicyclopentanyl ring structure, a dicyclopentenyl ring structure, a norbornane ring structure, an isobornane ring structure, a norbornene ring structure, an isobornene ring structure, and an adamantane ring structure.

Examples of the aromatic ring structure include a naphthalene ring and a benzene ring.

In particular, from the viewpoint of improving the jettability while maintaining the rub resistance, the polymerizable compound B preferably has two or more aromatic rings, and more preferably has two or three aromatic rings.

From the viewpoint of improving the jettability, a viscosity of the polymerizable compound B is preferably 1,000 mPa·s or less, more preferably 500 mPa·s or less, and still more preferably 200 mPa·s or less. The lower limit value of the viscosity is, for example, 1 mPa·s.

The viscosity of the polymerizable compound B is a value measured using a viscometer.

As the viscometer, for example, VISCOMETER TV-22 (manufactured by Toki Sangyo Co., Ltd.) can be used.

From the viewpoint of improving the jettability, a molecular weight of the polymerizable compound B is preferably 100 to 300.

In a case where the polymerizable compound B is further contained in addition to the polymerizable compound A, the increase in viscosity is suppressed in a case where the ink on a nozzle surface is dried, and jetting failure (nozzle clogging) is less likely to occur. In addition, in a case where the polymerizable compound B is contained, it is possible to prevent the jetting failure while maintaining the rub resistance.

A ratio of the content of the polymerizable compound B to the total content of the polymerizable compound A and the polymerizable compound B is preferably 0.2 to 0.5 and more preferably 0.3 to 0.5. In a case where the above-described ratio is 0.2 or more, the jettability is further improved. On the other hand, in a case where the above-described ratio is 0.5 or less, the crosslinking density in the ink film is increased, and the rub resistance is excellent.

### (Polymer P having acid group)

The specific particles contain at least one polymer P having an acid group (hereinafter, also simply referred to as "polymer P").

The polymer P plays a role of retaining the polymerizable compound A in the specific particles of the ink before being applied onto the base material, and thus contributes to improving the storage stability of the ink.

The polymer P may be a chain-like polymer or a crosslinked polymer.

In the present disclosure, the chain-like polymer means a polymer having no crosslinked structure, and the crosslinked polymer means a polymer having a crosslinking structure.

The chain-like polymer may have a cyclic structure or a branched structure.

For the specific particles containing the polymer P which is the chain-like polymer, for example, JP6584677B can be referred to.

In a case where the polymer P is the crosslinked polymer, a preferred aspect of the specific particles includes microcapsules containing a shell consisting of the polymer P which is the crosslinked polymer and a core containing a polymerizable compound.

For the specific particles containing the polymer P which is the crosslinked polymer, for example, JP6510681B can be referred to.

### -Weight-average molecular weight (Mw)-

A weight-average molecular weight (Mw) of the polymer P is preferably 3,000 to 200,000, more preferably 4,000 to 150,000, still more preferably 5,000 to 100,000, even more preferably 8,000 to 80,000, and even still more preferably 10,000 to 50,000.

In a case where Mw of the polymer P is 3,000 or more, the storage stability of the ink is further improved. The reason for this is considered to be that, in a case where Mw of the polymer P is 3,000 or more, the function of the polymer P (function of retaining the polymerizable compound A in the specific particles; in other words, function of suppressing bleeding out of the polymerizable compound A from the specific particles) is more effectively exhibited in the ink before being applied onto the base material.

In a case where Mw of the polymer P is 200,000 or less, blocking resistance of the image is further improved. The reason for this is considered to be that, in a case where Mw of the polymer P is 200,000 or less, a decrease in fluidity (that is, thickening) in the drying process of the ink applied onto the base material is suppressed, and as a result, volatilization of liquid components (that is, water and a water-soluble organic solvent) from the ink is further promoted.

### -Glass transition temperature (Tg)-

A glass transition temperature (Tg) of the polymer P is not particularly limited.

From the viewpoint of improving mobility of the polymer P and further improving image quality of the image (specifically, suppressing roughness of the image), Tg of the polymer P is preferably 120°C or lower, more preferably 100°C or lower, still more preferably 80°C or lower, and even more preferably 70°C or lower.

On the other hand, Tg of the polymer P is preferably 0°C or higher, more preferably 10°C or higher, still more preferably 20°C or higher, and even more preferably 30°C or higher.

In the present disclosure, the glass transition temperature (Tg) of the polymer means a value measured by differential scanning calorimetry (DSC).

Specifically, the glass transition temperature is measured in conformity with the method described in JIS K 7121 (1987) or JIS K 6240 (2011).

The glass transition temperature in the present disclosure is an extrapolated glass transition start temperature (hereinafter, also referred to as Tig).

The method of measuring the glass transition temperature will be described in more detail.

In a case where the glass transition temperature is acquired, the resin is maintained at a temperature lower than the expected glass transition temperature of the resin by approximately 50°C until the device is stabilized, the resin is heated to a temperature higher than the temperature at which the glass transition is completed by approximately 30°C at a heating rate of 20 °C/min, and a differential thermal analysis (DTA) curve or a DSC curve is created.

The extrapolated glass transition start temperature (Tig), that is, the glass transition temperature in the present disclosure is acquired as the temperature of the intersection between a straight line obtained by extending the base line on a low temperature side in the DTA curve or the DSC curve onto a high temperature side and a tangent drawn at a point where the gradient of a curve from a step-like change portion of the glass transition is maximized.

In a case where the ink contains two or more kinds of the polymers P, the glass transition temperature (Tg) of the polymer P means a weighted average value of the glass transition temperatures of the individual polymers P.

Examples of the polymer P include a urethane polymer, a urethane urea polymer, a urea polymer, an acrylic polymer, a polyester, a polyolefin, a polystyrene, a polycarbonate, and a polyamide.

Here, the urethane polymer means a polymer containing a urethane bond and not containing a urea bond; the urea polymer means a polymer containing a urea bond and not containing a urethane bond; and the urethane urea polymer means a polymer containing a urethane bond and a urea bond.

In addition, the acrylic polymer means a polymer (homopolymer or copolymer) of a raw monomer including at least one selected from the group consisting of acrylic acid, a derivative of acrylic acid (for example, acrylic acid ester and the like), methacrylic acid, and a derivative of methacrylic acid (for example, methacrylic acid ester and the like).

### -Bond U-

It is preferable that the polymer P contains a bond U which is at least one of a urethane bond or a urea bond. In other words, the polymer P is preferably a urethane polymer, a urethane urea polymer, or a urea polymer.

In a case where the polymer P contains the bond U, in the ink landed on the base material, the specific particles are likely to interact with each other due to interaction (for example, hydrogen bond) between the bonds U. Therefore, linking between the specific particles by the polymerization of the polymerizable compound A bleeding out from the specific particles is more likely to proceed. In this manner, since curing between the specific particles is more likely to proceed, the rub resistance of the image is further improved.

The bond U preferably contains a urethane bond.

In other words, it is preferable that the polymer P contains a urethane bond and does not contain a urea bond, or contains a urethane bond and a urea bond.

### -Acid group-

The polymer P preferably contains at least one acid group.

This contributes to the dispersion stability of the specific particles in the ink, and as a result, the storage stability of the ink is further improved.

The acid group may be neutralized or may be unneutralized.

Examples of the unneutralized acid group include a carboxyl group, a sulfo group, a sulfate group, a phosphonate group, and a phosphate group.

The neutralized acid group means an acid group in a form of a "salt" (for example, a salt of a carboxy group (for example, -COONa)). Examples of the neutralized acid group include salts of acid groups, such as a salt of a carboxy group, a salt of a sulfo group, a salt of a sulfuric acid group, a salt of a phosphonic acid group, and a salt of a phosphoric acid group.

Neutralization can be performed using, for example, an alkali metal hydroxide (for example, sodium hydroxide, potassium hydroxide, and the like) and an organic amine (for example, triethylamine and the like).

From the viewpoint of further improving the storage stability of the ink, the acid group in the polymer P is preferably at least one selected from the group consisting of a carboxy group, a salt of a carboxy group, a sulfo group, a salt of a sulfo group, a sulfate group, a salt of a sulfate group, a phosphonate group, a salt of a phosphonate group, a phosphate group, and a salt of a phosphate group; and more preferably at least one selected from the group consisting of a carboxy group, a salt of a carboxy group, a sulfo group, and a salt of a sulfo group.

As the above-described "salt" in the salt of a carboxyl group, the salt of a sulfo group, the salt of a sulfate group, the salt of a phosphonate group, and the salt of a phosphate group, an alkali metal salt or an organic amine salt is preferable, and an organic amine salt is more preferable.

As an organic amine in the organic amine salt, N,N-diisopropylethylamine or triethylamine is preferable.

In addition, in a case where the total millimole number of acid groups (for example, a carboxy group and a salt of a carboxy group) contained in 1 g of the polymer P is defined as an acid value of the polymer P, the acid value of the polymer P is preferably 0.10 mmol/g to 2.00 mmol/g and more preferably 0.30 mmol/g to 1.50 mmol/g, from the viewpoint of dispersion stability.

In addition, a degree of neutralization of the acid group in the polymer P is preferably 50% to 100% and more preferably 70% to 100%.

Here, the degree of neutralization refers to a ratio of "the number of neutralized acid groups" to "the sum of the number of unneutralized acid groups (for example, carboxy groups) and the number of neutralized acid groups (for example, salts of carboxy groups)" in the polymer P (that is, a ratio [the number of neutralized acid groups/(the number of unneutralized acid groups + the number of neutralized acid groups]).

The degree of neutralization of the acid group in the polymer P can be measured by neutralization titration.

### -Polymerizable group-

The specific particles contain not only the polymer P but also the polymerizable compound A. Therefore, the polymer P is not necessarily required to contain a polymerizable group. However, from the viewpoint of further improving the rub resistance of the image, the polymer P may contain a polymerizable group.

The polymerizable group which can be contained in the polymer P is preferably a photopolymerizable group or a thermal polymerizable group.

As the photopolymerizable group, a radically polymerizable group is preferable, a group having an ethylenic double bond is more preferable, and a (meth)acryloyl group, an allyl group, a styryl group, or a vinyl group is still more preferable. The radically polymerizable group is particularly preferably a (meth)acryloyl group from the viewpoint of radical polymerization reactivity and hardness of a film to be formed.

The thermally polymerizable group is preferably an epoxy group, an oxetanyl group, an aziridinyl group, an azetidinyl group, a ketone group, an aldehyde group, or a blocked isocyanate group.

The polymer P may contain only one kind of the polymerizable group or may contain two or more kinds thereof.

The fact that the polymer P contains a polymerizable group can be confirmed by, for example, Fourier transform infrared spectroscopy (FT-IR) analysis.

In a case where the number of millimoles of the ethylenic double bonds in 1 g of the polymer P is defined as a C=C value of the polymer P, the C=C value of the polymer P is preferably 0.05 mmol or more, more preferably 0.10 mmol/g or more, still more preferably 0.30 mmol/g or more, and particularly preferably 0.50 mmol/g or more, from the viewpoint of further improving the hardness of the image.

From the viewpoint of further improving water resistance and alcohol resistance of the image, the C=C value of the polymer P is preferably 0.05 mmol or more, more preferably 0.10 mmol/g or more, still more preferably 0.30 mmol/g or more, even more preferably 0.50 mmol/g or more, even still more preferably 0.60 mmol/g or more, and particularly preferably 0.70 mmol/g or more.

On the other hand, from the viewpoint of improving temporal curing properties of the ink (that is, suppressing a decrease in the curing properties of the ink over time), the C=C value of the polymer P is preferably 4.00 mmol/g or less, more preferably 3.00 mmol/g or less, still more preferably 2.00 mmol/g or less, and particularly preferably 1.50 mmol/g or less.

The polymer P may have a structure other than the above-described structure (that is, the bond U, the hydrophilic group, and the polymerizable group).

Examples of other structures include a polysiloxane bond (that is, a divalent polysiloxane group), a monovalent polysiloxane group, a monovalent fluorinated hydrocarbon group, and a divalent fluorinated hydrocarbon group.

### -Preferred structure of polymer P-

The polymer P preferably includes a structural unit derived from an isocyanate compound and a structural unit derived from a compound containing an active hydrogen group.

The polymer P of the above-described preferred aspect includes the bond U formed by a reaction between an isocyanate group of the isocyanate compound and the active hydrogen group of the compound containing an active hydrogen group.

As the active hydrogen group, a hydroxy group, a primary amino group, or a secondary amino group is preferable.

For example, a urethane group is formed by a reaction between an isocyanate group and a hydroxy group.

In addition, a urea group is formed by a reaction between an isocyanate group and a primary amino group or a secondary amino group.

The isocyanate compound and the compound containing an active hydrogen group, which are raw materials of the polymer P having the above-described preferred structure, will be hereinafter referred to as a raw material compound.

The isocyanate compound as the raw material compound may be used alone or in combination of two or more kinds thereof.

The compound containing an active hydrogen group as the raw material compound may be used alone or in combination of two or more kinds thereof.

Among the isocyanate compounds as the raw material compound, a bi- or higher functional isocyanate compound is preferable.

As at least one of the compounds containing an active hydrogen group as the raw material compound, a compound containing two or more active hydrogen groups is preferable.

Among the raw material compounds, at least one of the isocyanate compound or the compound containing an active hydrogen group preferably contains a hydrophilic group. In this manner, it is easy to produce the polymer P containing a hydrophilic group. In this case, at least a part of hydrophilic groups in the finally obtained polymer P may be a group in which the hydrophilic group in the raw material compound is neutralized.

A more preferred aspect is an aspect in which at least one kind of the compound containing an active hydrogen group in the raw material compound is a compound containing an active hydrogen group and a hydrophilic group.

In a case where the polymer P contains a polymerizable group, among the raw material compounds, at least one of the isocyanate compound or the compound containing an active hydrogen group preferably contains a polymerizable group. In this manner, it is easy to produce the polymer P containing a polymerizable group.

A more preferred aspect is an aspect in which at least one kind of the compound containing an active hydrogen group in the raw material compound is a compound containing an active hydrogen group and a polymerizable group.

As described above, the polymer P may be a chain-like polymer or a crosslinked polymer.

The chain-like polymer as the polymer P can be produced by reacting a bifunctional isocyanate compound with a compound containing two active hydrogen groups.

The crosslinked polymer as the polymer P can be produced by reacting a tri- or higher functional isocyanate compound with a compound containing two or more active hydrogen groups.

The crosslinked polymer as the polymer P can also be produced by reacting a bi- or higher functional isocyanate compound with a compound containing three or more active hydrogen groups.

Hereinafter, preferred raw material compounds will be described.

### -Isocyanate compound-

The isocyanate compound is preferably a bi- or higher functional isocyanate compound and more preferably a bi- to hexafunctional isocyanate compound.

The polymer P in a case where a bifunctional isocyanate compound is used as the raw material compound has the following structural unit (P1) which is a structural unit derived from the bifunctional isocyanate compound.

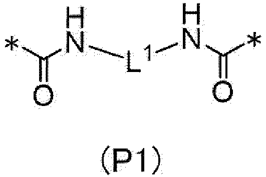

In the structural unit (P1), L¹ represents a divalent organic group having 1 to 20 carbon atoms, and * represents a bonding position.

Specific examples of L¹ include a residue obtained by removing two isocyanate groups (NCO groups) from the bifunctional isocyanate compound according to the following specific examples.

Specific examples of the bifunctional isocyanate compound are as follows. However, the bifunctional isocyanate compound is not limited to the following specific examples.

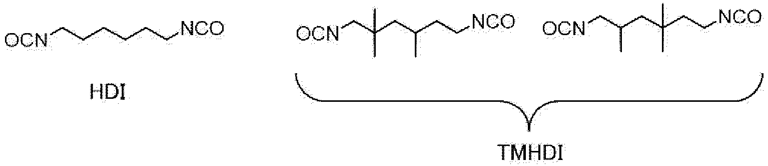

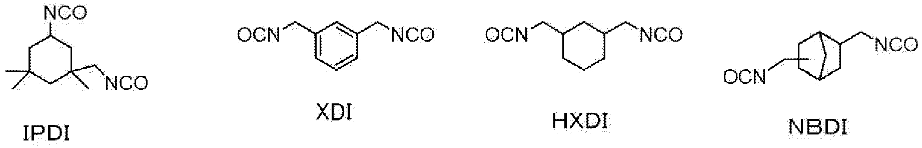

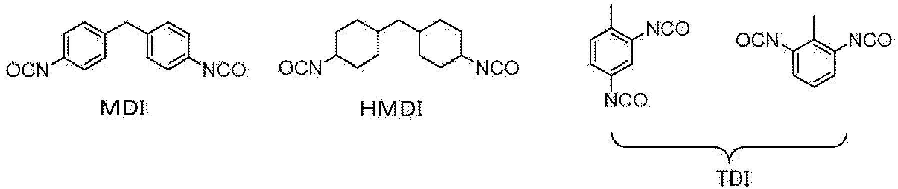

In addition, as the bifunctional isocyanate compound, a bifunctional isocyanate compound derived from the above-described specific examples can also be used. Examples thereof include DURANATE (registered trademark) D101, D201, and A101 (manufactured by Asahi Kasei Corporation).

In addition, it is preferable that the tri- or higher functional isocyanate compound is a reaction product of at least one selected from the group consisting of the bifunctional isocyanate compounds and at least one selected from the group consisting of compounds containing three or more active hydrogen groups (for example, a tri- or higher functional polyol compound, a tri- or higher functional polyamine compound, and a tri- or higher functional polythiol compound).

The number of moles (number of molecules) of the bifunctional isocyanate compound to react with the compound containing three or more active hydrogen groups is preferably 0.6 times or more, more preferably 0.6 times to 5 times, still more preferably 0.6 times to 3 times, and even more preferably 0.8 times to 2 times the number of moles of the active hydrogen group (number of equivalents of the active hydrogen group) in the compound containing three or more active hydrogen groups.

Examples of the bifunctional isocyanate compound for forming the tri- or higher functional isocyanate compound include the bifunctional isocyanate compounds according to the specific examples described above.

Examples of the compound containing three or more active hydrogen groups for forming the tri- or higher functional isocyanate compound include compounds described in paragraphs 0057 and 0058 of WO2016/052053A.

Examples of the tri- or higher functional isocyanate compound include an adduct type tri- or higher functional isocyanate compound, an isocyanurate type tri- or higher functional isocyanate compound, and a biuret type tri- or higher functional isocyanate compound.

Examples of a commercially available product of the adduct type tri- or higher functional isocyanate compound include TAKENATE (registered trademark) D-102, D-103, D-103H, D-103M2, P49-75S, D-110N, D-120N, D-140N, and D-160N (Mitsui Chemicals, Inc.), DESMODUR (registered trademark) L75 and UL57SP (Sumika Bayer Urethane Co., Ltd.), CORONATE (registered trademark) HL, HX, and L (Nippon Polyurethane Industry Co., Ltd.), and P301-75E (Asahi Kasei Corporation.).

Examples of a commercially available product of the isocyanurate type tri- or higher functional isocyanate compound include TAKENATE (registered trademark) D-127N, D-170N, D-170HN, D-172N, and D-177N (Mitsui Chemicals, Inc.), SUMIDUR N3300 and DESMODUR (registered trademark) N3600, N3900, and Z4470BA (Sumika Bayer Urethane Co., Ltd.), CORONATE (registered trademark) HX and HK (Nippon Polyurethane Industry Co., Ltd.), and DURANATE (registered trademark) TPA-100, TKA-100, TSA-100, TSS-100, TLA-100, and TSE-100 (Asahi Kasei Corporation.).

Examples of a commercially available product of the biuret type tri- or higher functional isocyanate compound include TAKENATE (registered trademark) D-165N and NP1100 (Mitsui Chemicals, Inc.), DESMODUR (registered trademark) N3200 (sumika Bayer Urethane Co., Ltd.), and DURANATE (registered trademark) 24A-100 (Asahi Kasei Corporation.).

At least one of the isocyanate compounds as the raw material compound may be an isocyanate compound containing a hydrophilic group. For the isocyanate compound containing a hydrophilic group, descriptions described in paragraphs 0112 to 0118 and paragraphs 0252 to 0254 of WO2016/052053A can be referred to.

At least one of the isocyanate compounds as the raw material compound may be an isocyanate compound containing a polymerizable group. For the isocyanate compound containing a polymerizable group, paragraphs 0084 to 0089, 0203, and 0205 of WO2016/052053A can be referred to.

### -Compound containing active hydrogen group-

The compound containing an active hydrogen group is preferably a compound containing two or more active hydrogen groups.

As the compound containing two or more active hydrogen groups, a polyol compound (that is, a compound having two or more hydroxy groups) or a polyamine compound (that is, a compound having two or more amino groups) is more preferable.

The polymer P in a case where the compound containing an active hydrogen group and a hydrophilic group is used as the raw material compound preferably has at least one of the following structural units (P0).

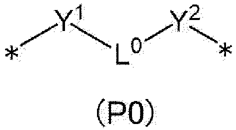

In the structural unit (P0), L⁰ represents a divalent organic group, Y¹ and Y² each independently represent an oxygen atom, a sulfur atom, or a -NR¹- group, R¹ represents a hydrogen atom or a hydrocarbon group having 1 to 10 carbon atoms, and * represents a bonding position.

In the structural unit (P0), the divalent organic group represented by L⁰ may be a group consisting of a carbon atom and a hydrogen atom or a group having a carbon atom, a hydrogen atom, and a heteroatom (such as an oxygen atom, a nitrogen atom, or a sulfur atom).

The divalent organic group represented by L⁰ may include at least one of a hydrophilic group or a polymerizable group.

Specific examples of L⁰ include a residue obtained by removing two active hydrogen groups from specific examples of a compound containing two or more active hydrogen groups, which will be described later.

R¹ is preferably a hydrogen atom or a hydrocarbon group having 1 to 6 carbon atoms, and more preferably a hydrogen atom or a hydrocarbon group having 1 to 3 carbon atoms.

Y¹ and Y² are each independently preferably an oxygen atom or a -NR¹- group, and more preferably an oxygen atom.

Specific examples of the diol compound as the compound containing an active hydrogen group are shown below, but the compound containing an active hydrogen group is not limited to the following specific examples.

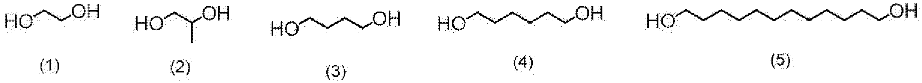

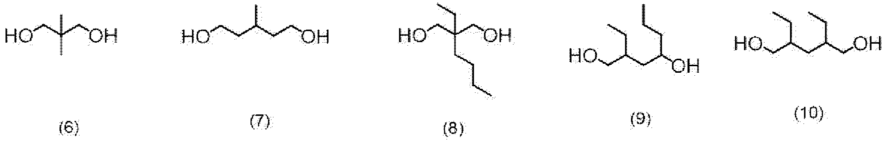

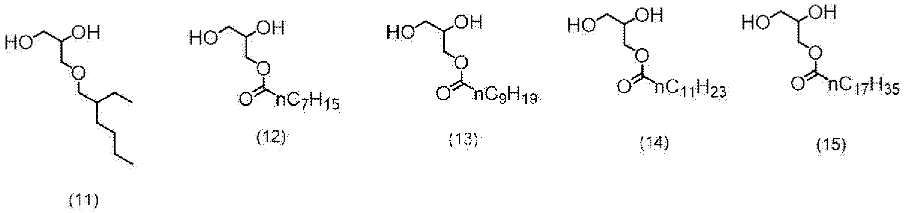

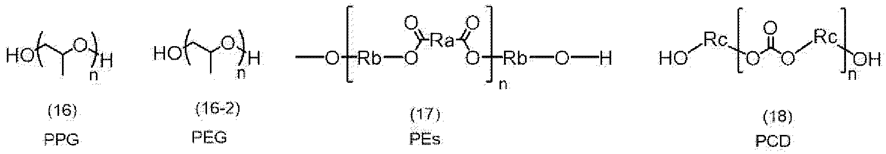

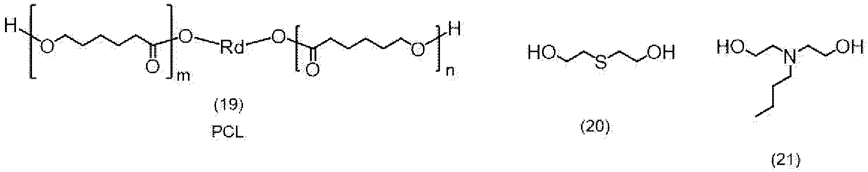

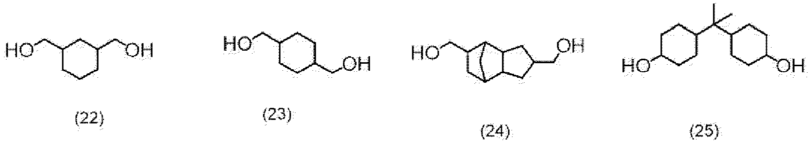

Among the compounds (12) to (15), nC₇H₁₅, nC₉H₁₉, nC₁₁H₂₃, and nC₁₇H₃₅ each represent a normal heptyl group, a normal nonyl group, a normal undecyl group, or a normal heptadecyl group.

The compound (16) PPG is polypropylene glycol, and n represents a repetition number.

The compound (16-2) PEG is polyethylene glycol, and n represents a repetition number.

The compound (17) PEs is a polyester diol, n represents a repetition number, and Ra and two Rb's each independently represent a divalent hydrocarbon group having 2 to 25 carbon atoms. n pieces of Ra's in the compound (17) PEs may be the same or different from each other. (n + 1) pieces of Rb's in the compound (17) PEs may be the same or different from each other.

The compound (18) PCD is a polycarbonate diol, n represents a repetition number, and (n + 1) pieces of Rc's each independently represent an alkylene group having 2 to 12 carbon atoms (preferably 3 to 8 carbon atoms and more preferably 3 to 6 carbon atoms). (n + 1) pieces of Rc's in the compound (18) PCD may be the same or different from each other.

The compound (19) PCL is a polycaprolactone diol, n and m each represent a repetition number, and Rd represents an alkylene group having 2 to 25 carbon atoms.

### -Compound containing active hydrogen group and polymerizable group-

Examples of the compound containing an active hydrogen group also include a compound containing an active hydrogen group and a polymerizable group.

The compound containing an active hydrogen group and a polymerizable group is suitable as a compound for introducing a polymerizable group into the polymer P (hereinafter, also referred to as "compound for introducing a polymerizable group").

Specific examples of a diol compound as the compound containing an active hydrogen group and a polymerizable group are shown below, but the compound containing an active hydrogen group and a polymerizable group is not limited to the following specific examples.

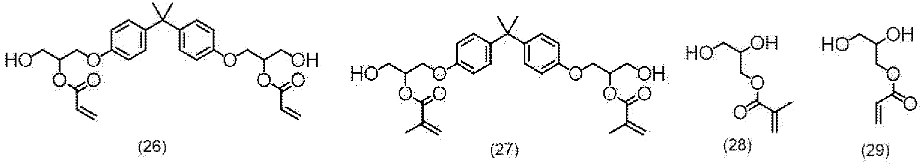

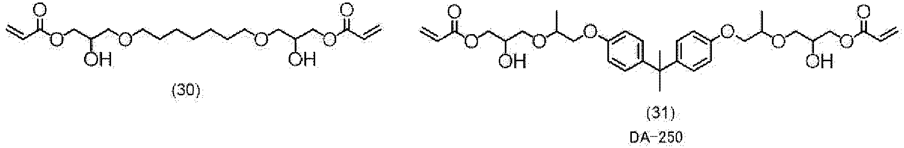

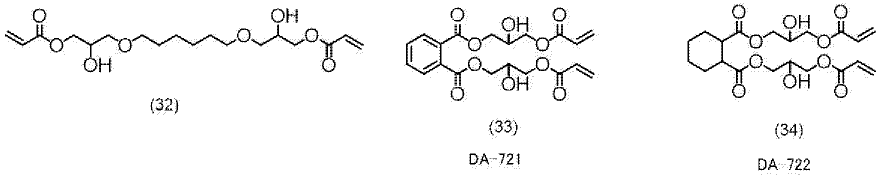

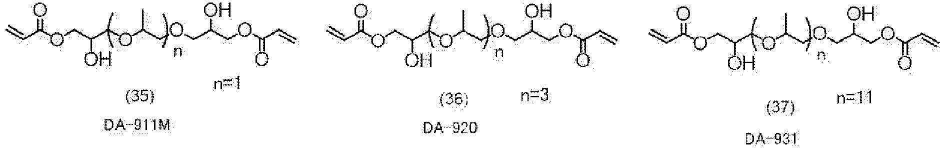

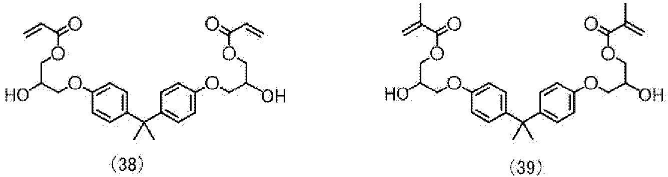

For the compound containing an active hydrogen group and a polymerizable group, description in paragraphs 0075 to 0089 of WO2016/052053A may be appropriately referred to.

### -Compound containing active hydrogen group and hydrophilic group-

Examples of the compound containing an active hydrogen group also include a compound containing an active hydrogen group and a hydrophilic group.

The compound containing an active hydrogen group and a hydrophilic group is suitable as a compound for introducing a hydrophilic group into the polymer P (hereinafter, also referred to as "compound for introducing a hydrophilic group").

The polymer P in a case where the compound containing an active hydrogen group and a hydrophilic group is used as the raw material compound preferably has the following structural unit (P2).

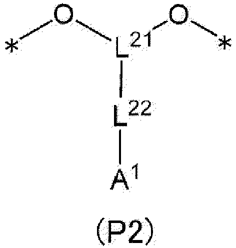

In the structural unit (P2), L²¹ represents a trivalent organic group having 1 to 20 carbon atoms, L²² represents a single bond or a divalent organic group having 1 to 20 carbon atoms, A¹ represents a carboxy group, a salt of the carboxy group, a sulfo group, or a salt of the sulfo group, and * represents a bonding position.

The number of carbon atoms in the trivalent organic group having 1 to 20 carbon atoms, represented by L²¹, is preferably 2 to 20, more preferably 3 to 20, and still more preferably 4 to 20.

As the trivalent organic group represented by L²¹, a trivalent hydrocarbon group or a group in which at least one carbon atom in the trivalent hydrocarbon group is replaced with a heteroatom (preferably, an oxygen atom, a sulfur atom, or a nitrogen atom) is preferable.

The number of carbon atoms in the divalent organic group having 1 to 20 carbon atoms, represented by L²², is preferably 1 to 10 and more preferably 1 to 6.

As the divalent organic group represented by L²², a divalent hydrocarbon group (preferably an alkylene group) or a group in which at least one carbon atom in a divalent hydrocarbon group (preferably an alkylene group) is replaced with an oxygen atom or a sulfur atom (preferably an oxygen atom) is preferable.

L²² may be a single bond.

Specific examples of the compound containing an active hydrogen group and a hydrophilic group are shown below, but the compound containing an active hydrogen group and a hydrophilic group is not limited to the following specific examples. Each of the carboxy group and the sulfo group in the following specific examples may be neutralized (that is, it may be a salt of a carboxy group or a salt of a sulfo group).

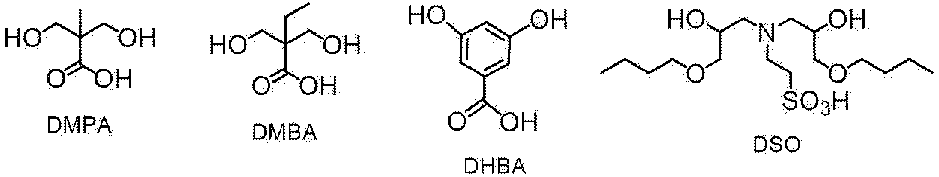

For the compound containing an active hydrogen group and a hydrophilic group, description in paragraphs 0112 to 0118 and paragraphs 0252 to 0254 of WO2016/052053A can be appropriately referred to.

A content of the polymer P is preferably 10% by mass to 90% by mass, more preferably 20% by mass to 80% by mass, still more preferably 30% by mass to 70% by mass, and even more preferably 40% by mass to 60% by mass with respect to the total solid content of the specific particles.

In the present disclosure, the total solid content of the specific particles means the total amount of the specific particles excluding the solvent (that is, water and an organic solvent). In a case where the specific particles do not contain a solvent, the total solid content of the specific particles matches the total amount of the specific particles.

The content of the polymer P is preferably 0.3% by mass to 20% by mass, more preferably 0.5% by mass to 15% by mass, and still more preferably 1% by mass to 10% by mass with respect to the total amount of the ink.

From the viewpoint of storage stability of the ink, a ratio of the content of the polymerizable compound A to the total content of the polymer P and the polymerizable compound A is preferably 0.3 to 0.7 and more preferably 0.4 to 0.6. In a case where the ratio is within the above-described range, the function of the polymer P (function of retaining the polymerizable compound A in the specific particles; in other words, function of suppressing bleeding out of the polymerizable compound A from the specific particles) is more effectively exhibited.

### (Polymerizable compound other than polymerizable compound A and polymerizable compound B)

The specific particles may contain a polymerizable compound other than the polymerizable compound A and the polymerizable compound B (hereinafter, also referred to as "other polymerizable compounds").

From the viewpoint of suppressing bleeding out of the other polymerizable compounds, a content of the other polymerizable compounds is preferably 5% by mass or less, more preferably 3% by mass or less, and still more preferably 1% by mass or less with respect to the total amount of the ink.

A molecular weight of the other polymerizable compounds is preferably less than 1,000, more preferably 100 to 900, still more preferably 100 to 800, and particularly preferably 150 to 750. The molecular weight of the other polymerizable compounds can be calculated from the kind and the number of atoms constituting the polymerizable compound.

As the other polymerizable compounds which can be contained in the specific particles, a photopolymerizable compound is preferable, and a radically polymerizable compound is more preferable.

The radically polymerizable compound has a radically polymerizable group.

The radically polymerizable compound preferably has an ethylenically unsaturated group, and a preferred aspect of the ethylenically unsaturated group is the same as the preferred aspect of the ethylenically unsaturated group contained in the polymerizable compound A.

The number of polymerizable groups contained in the other polymerizable compounds may be only one or two or more.

Examples of the other polymerizable compounds include a (meth)acrylate compound, a styrene compound, a vinyl naphthalene compound, an N-vinyl heterocyclic compound, an unsaturated polyester, an unsaturated polyether, an unsaturated polyamide, and an unsaturated urethane.

Among these, the other polymerizable compounds are preferably a polymerizable compound having a Clog P value of 4 or more.

The specific particles may contain a polymerizable compound having a Clog P value of less than 4 as the other polymerizable compounds, but in a case where the polymerizable compound having a Clog P value of less than 4 is contained, a content thereof is preferably 3% by mass or less with respect to the total amount of the ink. In addition, it is more preferable that the specific particles do not contain the polymerizable compound having a Clog P value of less than 4 as the other polymerizable compounds.

In a case where the content of the polymerizable compound having a Clog P value of less than 4, which is contained in the specific particles, is 3% by mass or less, the polymerizable compound having a Clog P value of less than 4 is prevented from bleeding out from the specific particles and being hydrolyzed to form an acidic compound, and a change in physical properties (particularly, pH) of the ink is suppressed. In this manner, the storage stability of the ink is obtained.

In the present disclosure, the Clog P value is calculated using a fragment method. Chem Draw Professional 16 (manufactured by PerkinElmer Informatics, Inc.) is used as calculation software for the fragment method.

In a case where urethane acrylate having six acryloyl groups is used as the polymerizable compound A, the urethane acrylate having six acryloyl groups is produced, for example, by using a mixture of pentaerythritol triacrylate and pentaerythritol tetraacrylate. In this case, the pentaerythritol triacrylate reacts with the isocyanate compound, and the pentaerythritol tetraacrylate does not react with the isocyanate compound. Therefore, the product includes the pentaerythritol tetraacrylate in addition to the urethane acrylate having six acryloyl groups. The pentaerythritol tetraacrylate has a Clog P value of 3.5. Therefore, from the viewpoint of obtaining the storage stability of the ink, in a case where the urethane acrylate having six acryloyl groups is produced by the above-described method, it is preferable to perform a purification treatment for removing the pentaerythritol tetraacrylate and use only the urethane acrylate having six acryloyl groups in the preparation of the ink.

In addition, in a case where urethane acrylate having ten acryloyl groups is used as the polymerizable compound A, the urethane acrylate having ten acryloyl groups is produced by using, for example, dipentaerythritol pentaacrylate and dipentaerythritol hexaacrylate. In this case, the dipentaerythritol pentaacrylate reacts with the isocyanate compound, and the dipentaerythritol hexaacrylate does not react with the isocyanate compound. Therefore, the product includes the dipentaerythritol hexaacrylate in addition to the urethane acrylate having ten acryloyl groups. The dipentaerythritol hexaacrylate has a Clog P value of 5.1. Therefore, in a case of producing the urethane acrylate having ten acryloyl groups by the above-described method, a mixture of the urethane acrylate having ten acryloyl groups and the dipentaerythritol hexaacrylate may be used in the preparation of the ink, without performing the purification treatment for removing the dipentaerythritol hexaacrylate.

### (Radical polymerization initiator)

It is preferable that the specific particles contain at least one radical polymerization initiator.

In the present disclosure, the radical polymerization initiator means a compound which absorbs light to generate a radical.

In a case where the specific particles contain a radical polymerization initiator, the rub resistance and the adhesiveness of the ink film are further improved.

The reason for this is considered to be that a distance between the polymerizable compound A and the radical polymerization initiator is shortened, and a curing sensitivity (hereinafter, also simply referred to as "sensitivity") of the ink film is improved.

In addition, in a case where the specific particles contain a radical polymerization initiator, a radical polymerization initiator (for example, a radical polymerization initiator having a solubility in water at 25°C of 1.0% by mass or less) which is highly sensitive but difficult to use due to low dispersibility or low solubility in water can be used. As a result, a range of selection of the radical polymerization initiator to be used is widened, and a range of selection of the light source to be used is also widened. Therefore, the curing sensitivity can be improved as compared with the related art.

Specific examples of the radical polymerization initiator which is highly sensitive but difficult to use due to low dispersibility or low solubility in water include a carbonyl compound and an acylphosphine oxide compound described later, and an acylphosphine oxide compound is preferable.

In the ink according to the present disclosure, the radical polymerization initiator can be contained in the ink according to the present disclosure by containing, in the specific particles, the radical polymerization initiator having low solubility in water.

In addition, the ink in which the specific particles contain a radical polymerization initiator is more excellent in storage stability than the photocurable composition in the related art. The reason for this is considered to be that the radical polymerization initiator is contained in the specific particles, and thus aggregation or sedimentation of the radical polymerization initiator is suppressed.

As the radical polymerization initiator, for example, description in paragraphs 0091 to 0094 of WO2016/052053A can be appropriately referred to.

As the radical polymerization initiator, (a) a carbonyl compound such as an aromatic ketone or (b) an acylphosphine oxide compound is preferable. Examples of the radical polymerization initiator include bis(2,4,6-trimethylbenzoyl)-phenylphosphine oxide (for example, product name "Omnirad 819", manufactured by IGM Resins B.V), 2-(dimethylamine)-1-(4-morpholinophenyl)-2-benzyl-1-butanone (for example, product name "Omnirad 369", manufactured by IGM Resins B.V), 2-methyl-1-(4-methylthiophenyl)-2-morpholinopropan-1-one (for example, product name "Omnirad 907", manufactured by IGM Resins B.V.), 1-hydroxy-cyclohexyl-phenyl-ketone (product name "Omnirad 184", manufactured by IGM Resins B.V), 2,4,6-trimethylbenzoyl-diphenyl-phosphine oxide (for example, product name "Omnirad TPO-H", manufactured by IGM Resins B.V), and (2,4,6-trimethylbenzoyl)ethoxyphenylphosphine oxide (for example, product name "Omnirad TPO-L", manufactured by IGM Resins B.V.).

Among these, from the viewpoint of improving sensitivity and the viewpoint of suitability for LED light, the radical polymerization initiator is preferably (b) the acylphosphine oxide compound, and more preferably a monoacylphosphine oxide compound or a bisacylphosphine oxide compound.

A wavelength of the LED light is preferably 355 nm, 365 nm, 385 nm, 395 nm, or 405 nm.

The specific particles in the aspect of containing the polymerization initiator can be produced, for example, by emulsifying a mixture obtained by mixing an oil-phase component containing the polymer P (or the raw material compound for producing the polymer P), the polymerizable compound A, and the polymerization initiator, and a water-phase component.

A content of the radical polymerization initiator is preferably 0.1% by mass to 15% by mass, more preferably 0.5% by mass to 10% by mass, and still more preferably 1% by mass to 6% by mass with respect to the total solid content of the specific particles.

The content of the radical polymerization initiator is preferably 0.1% by mass to 3.0% by mass, more preferably 0.3% by mass to 2.0% by mass, and still more preferably 0.5% by mass to 1.5% by mass with respect to the total amount of the ink.

### (Sensitizer)

It is preferable that the specific particles contain at least one sensitizer.

In a case where the specific particles contain a photopolymerization initiator, the specific particles preferably contain a sensitizer.

In a case where the specific particles contain a sensitizer, decomposition of the photopolymerization initiator by the irradiation with active energy rays can be further promoted.

The sensitizer is a substance which is electronically excited by absorbing specific active energy rays. The electronically excited sensitizer comes into contact with the photopolymerization initiator and causes actions such as electron migration, energy transfer, and heat generation. In this manner, chemical change in the photopolymerization initiator, that is, decomposition, or generation of radicals, acid, and base is promoted.

Examples of the sensitizer include benzophenone, thioxanthone, isopropylthioxanthone, anthraquinone, a 3-acylcoumarin derivative, terphenyl, styrylketone, 3-(aroylmethylene)thiazoline, camphorquinone, eosin, rhodamine, and erythrosine.

In addition, as the sensitizer, a compound represented by General Formula (i) described in JP2010-24276A, a compound represented by General Formula (I) described in JP1994-107718A (JP-H6-107718A), and the like can also be suitably used.

Among these, as the sensitizer, from the viewpoint of suitability for LED light and reactivity with the photopolymerization initiator, at least one selected from thioxanthone, isopropylthioxanthone, or benzophenone is preferable; at least one selected from thioxanthone or isopropylthioxanthone is more preferable; and isopropylthioxanthone is still more preferable.

In a case where the specific particles contain a sensitizer, a content of the sensitizer is preferably 0.1% by mass to 20% by mass, more preferably 0.2% by mass to 15% by mass, and still more preferably 0.3% by mass to 10% by mass with respect to the solid content of the specific particles.

The content of the sensitizer is preferably 0.01% by mass to 0.5% by mass, more preferably 0.05% by mass to 0.3% by mass, and still more preferably 0.1% by mass to 0.2% by mass with respect to the total amount of the ink.

The specific particles in the aspect of containing the polymerization initiator and the sensitizer can be produced, for example, by emulsifying a mixture obtained by mixing an oil-phase component containing the polymer P (or the raw material compound for producing the polymer P), the polymerizable compound A, the photopolymerization initiator, and the sensitizer, and a water-phase component.

### (Other components)

The specific particles may contain a component other than the above-described components.

Examples of other components include a compound containing at least one selected from the group consisting of a polysiloxane bond (that is, a divalent polysiloxane group), a monovalent polysiloxane group, a monovalent fluorinated hydrocarbon group, and a divalent fluorinated hydrocarbon group.

### (Method for producing water dispersion of specific particles)

The ink according to the present disclosure can be manufactured by producing a water dispersion of the specific particles containing the specific particles and water described above, and adding other components to the obtained water dispersion as necessary.

In addition, since the ink according to the present disclosure is one form of the water dispersion of the specific particles, the ink can also be directly manufactured as the water dispersion of the specific particles (that is, without adding other components) depending on the formulation of the ink.

The method for producing the water dispersion of the specific particles is not particularly limited.

Examples of the method for producing the water dispersion of the specific particles include the following production methods A and B.

### -Production method A-

The production method A includes a step of mixing and emulsifying an oil-phase component including an organic solvent, the polymer P, and a polymerizable monomer, and a water-phase component including water to obtain the water dispersion of the specific particles.

The production method A is suitable as a method for producing a water dispersion of the specific particles containing the polymer P in an aspect of the chain-like polymer.

For the production method A, known documents such as JP6584677B can be referred to.

### -Production method B-

The production method B includes a step of mixing and emulsifying an oil-phase component including an organic solvent, the raw material compound of the polymer P (for example, the tri- or higher functional isocyanate compound, the compound having two or more active hydrogen groups, and the like), and a polymerizable monomer, and a water-phase component including water to obtain the water dispersion of the specific particles.

The production method B is suitable as a method for producing a water dispersion of the specific particles (for example, microcapsules) containing the polymer P in an aspect of the crosslinked polymer.

For the production method B, known documents such as WO2016/052053A can be referred to.

### <Water-soluble organic solvent>

It is preferable that the ink according to the present disclosure contains at least one water-soluble organic solvent.

In this manner, the jettability of the ink from the ink jet head is further secured.

In the present disclosure, "water-soluble" in the "water-soluble organic solvent" means a property of being dissolved in 1 g or more in 100 g of water at 25°C.

The amount of the water-soluble organic solvent dissolved in 100 g of water at 25°C is preferably 5 g or more, and more preferably 10 g or more.

A content of the water-soluble organic solvent is preferably 1% by mass to 35% by mass, more preferably 3% by mass to 30% by mass, still more preferably 5% by mass to 20% by mass, and even more preferably 7% by mass to 15% by mass with respect to the total amount of the ink.

In a case where the content of the water-soluble organic solvent is 1% by mass or more, the jettability of the ink is further improved.

In a case where the content of the water-soluble organic solvent is 35% by mass or less, the storage stability of the ink is further improved.

Specific examples of the water-soluble organic solvent are as follows:
· Alcohols (for example, methanol, ethanol, propanol, isopropanol, butanol, isobutanol, secondary butanol, tertiary butanol, pentanol, hexanol, cyclohexanol, and benzyl alcohol)
· Polyhydric alcohols (for example, ethylene glycol, diethylene glycol, triethylene glycol, polyethylene glycol, propylene glycol, dipropylene glycol, polypropylene glycol, butylene glycol, hexanediol, pentanediol, glycerin, hexanetriol, thiodiglycol, and 2-methylpropanediol)
· Polyhydric alcohol ethers (for example, ethylene glycol monomethyl ether, ethylene glycol monoethyl ether, ethylene glycol monobutyl ether, diethylene glycol monoethyl ether, diethylene glycol monomethyl ether, diethylene glycol monobutyl ether, propylene glycol monomethyl ether, propylene glycol monobutyl ether, tripropylene glycol monomethyl ether, dipropylene glycol monomethyl ether, dipropylene glycol dimethyl ether, ethylene glycol monomethyl ether acetate, triethylene glycol monomethyl ether, triethylene glycol monoethyl ether, triethylene glycol monobutyl ether, ethylene glycol monophenyl ether, and propylene glycol monophenyl ether)
·Amines (for example, ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyldiethylenetriamine, and tetramethylpropylenediamine)
·Amides (for example, formamide, N,N-dimethylformamide, and N,N-dimethylacetamide)
· Heterocyclic rings (for example, 2-pyrrolidone, N-methyl-2-pyrrolidone, cyclohexylpyrrolidone, 2-oxazolidone, 1,3-dimethyl-2-imidazolidinone, and γ-butyrolactone)
· Sulfoxides (for example, dimethyl sulfoxide)
· Sulfones (for example, sulfolane)
· Others (urea, acetonitrile, acetone, and the like)

### <Coloring material>

The ink according to the present disclosure may be an ink containing at least one coloring material (so-called "colored ink") or an ink not containing a coloring material (so-called "clear ink").

In a case where the ink contains a coloring material, it is preferable that the coloring material is contained outside the specific particles (that is, the specific particles do not contain the coloring material).

The coloring material is not particularly limited, and can be optionally selected from known coloring materials such as a pigment, a water-soluble dye, and a dispersed dye. Among these, from the viewpoint of excellent weather fastness and rich color reproducibility, the coloring material is more preferably a pigment.

The pigment is not particularly limited, and can be appropriately selected according to the purpose; and examples thereof include known organic pigments and inorganic pigments. In addition, examples of the pigment also include resin particles dyed with a dye, a commercially available pigment dispersion, and a surface-treated pigment (for example, a pigment dispersed in water, a liquid compound, an insoluble resin, or the like as a dispersion medium, and a pigment surface-treated with a resin, a pigment derivative, or the like).

Examples of the organic pigment and the inorganic pigment include a yellow pigment, a red pigment, a magenta pigment, a blue pigment, a cyan pigment, a green pigment, an orange pigment, a violet pigment, a brown pigment, a black pigment, and a white pigment.

In a case where the pigment is used as the coloring material, a pigment dispersing agent may be used as necessary.

In addition, in a case where the pigment is used as the coloring material, a self-dispersing pigment having a hydrophilic group on a surface of pigment particles may be used as the pigment.

For the coloring material and the pigment dispersing agent, descriptions in paragraphs 0180 to 0200 of JP2014-040529A and paragraphs 0122 to 0129 of WO2016/052053A can be appropriately referred to.

In a case where the ink according to the present disclosure contains a coloring material, a content of the coloring material is preferably 0.1% by mass to 20% by mass, more preferably 0.5% by mass to 10% by mass, and particularly preferably 0.5% by mass to 5% by mass with respect to the total amount of the ink.

### <Other components>

The ink according to the present disclosure may contain other components in addition to the components described above as necessary.

The other components may be contained in the specific particles or may not be contained in the specific particles.

The ink according to the present disclosure may contain a surfactant, a polymerization inhibitor, an ultraviolet absorber, and the like as the other components.

In addition, the ink according to the present disclosure may contain a water-soluble polymerizable monomer, a water-soluble photopolymerization initiator, a water-soluble resin, and the like outside the specific particles as necessary.

For these components, for example, paragraphs 0134 to 0157 of WO2016/052053A can be referred to.

### (Preferred method for producing ink)

The method for producing the ink according to the present disclosure is not particularly limited, but is preferably an aspect including a step of producing the water dispersion of the specific particles by the above-described method of producing the water dispersion (the production method A or the production method B) and a step of adding and mixing other components such as the pigment and the water-soluble organic solvent with the water dispersion of the specific particles.

In addition, as another aspect of the method for producing the ink according to the present disclosure, an aspect of directly producing the ink as the water dispersion of the specific particles (that is, a method of not adding the other components to the water dispersion of specific particles) by the step of producing the water dispersion of the specific particles by the above-described method of producing the water dispersion (the production method A or the production method B) is also exemplified.

### (Preferred physical properties of ink)

A viscosity of the ink according to the present disclosure at 25°C is preferably 3 mPa·s to 15 mPa·s and more preferably 3 mPa·s to 13 mPa·s. In particular, the ink according to the present disclosure preferably has a viscosity of 50 mPa·s or less at 25°C. In a case where the viscosity of the ink is within the above-described range, higher jetting stability can be achieved.

The viscosity of the ink is a value measured using a viscometer.

As the viscometer, for example, VISCOMETER TV-22 (manufactured by Toki Sangyo Co., Ltd.) can be used.

In the ink according to the present disclosure, a content of (meth)acrylic acid contained in an ink after a storage test is preferably 0.1% by mass or less. The storage test is carried out by the following method.

The ink immediately after preparation is put into an airtight container, the airtight container is put into a constant-temperature chamber at 60°C, the constant-temperature chamber is left for 1 week, and then the airtight container is taken out.

The content of the (meth)acrylic acid contained in the ink after the storage test is calculated by high performance liquid chromatography (HPLC) measurement. In the measurement by HPLC, Thermo Scientific UltiMate 3000 HPLC (Thermo Fisher Scientific, Inc.) is used as a measuring device, TSKgel ODS-100V (4.6 mmID × 15 cm, Tosoh Corporation) is used as a column, and a 0.1% by mass phosphoric acid methanol solution and a 0.1% by mass phosphoric acid aqueous solution are used as an eluent. In addition, as measurement conditions, a methanol solution having a sample concentration of 1.5% by mass, a flow rate of 1.0 mL/min, a sample injection amount of 3 µL, and a measurement temperature of 40°C, a UV detector (detection wavelength: 210 nm) is used. A calibration curve is created from five samples of a 0.0001% by mass methanol solution, a 0.0005% by mass methanol solution, a 0.001% by mass methanol solution, a 0.005% by mass methanol solution, and a 0.01% by mass methanol solution of (meth)acrylic acid.

### [Ink jet recording method]

The ink jet recording method according to the present disclosure preferably includes a step of applying the above-described ink onto a base material by an ink jet recording system (hereinafter, also referred to as "applying step") and a step of irradiating the ink applied onto the base material with an active energy ray (hereinafter, also referred to as "irradiating step").

Hereinafter, the operation of irradiating with an active energy ray may be referred to as "exposure".

In the ink jet recording method according to the present disclosure, since the ink according to the present disclosure is used, the same effect as the effect obtained by the ink according to the present disclosure is exhibited.

### <Base material>

The base material used in the ink jet recording method according to the present disclosure is not particularly limited, and may be a permeable base material or an impermeable base material, but is preferably an impermeable base material.

Here, the impermeable base material refers to a base material having a water absorption rate (unit: % by mass, measurement time: 24 hours) of less than 10 in ASTM D570 of the ASTM test method.

The above-described water absorption rate of the impermeable base material is preferably 5% by mass or less.

Examples of the impermeable base material include paper on which plastic (for example, polyethylene, polypropylene, polystyrene, or the like) is laminated, polyester cloth, a metal plate (for example, a plate of a metal such as aluminum, zinc, and copper), a plastic film (for example, a film of polyvinyl chloride (PVC) resin, cellulose diacetate, cellulose triacetate, cellulose propionate, cellulose butyrate, cellulose acetate butyrate, cellulose nitrate, polyethylene terephthalate (PET), polyethylene (PE), polystyrene (PS), polypropylene (PP), polycarbonate (PC), polyvinyl acetal, an acrylic resin, or the like), paper on which the metal is laminated or vapor-deposited, a plastic film on which the metal is laminated or vapor-deposited, and leather.

Examples of the leather include natural leather (also called "real leather") and synthetic leather (for example, polyvinyl chloride (PVC) leather or polyurethane (PU) leather). For the leather, for example, paragraphs 0163 to 0165 of JP2009-058750A can be referred to.

For example, in a case of forming an ink film on leather (for example, a seat sheet for a vehicle, a bag, shoes, a wallet, and the like) or a plastic film as the impermeable base material, the formed ink film is required to have excellent rub resistance and stretchability.

In addition, in formation of an ink film on a base material other than leather and a plastic film, excellent rub resistance and stretchability may be required for the formed film.

With the ink jet recording method according to the present disclosure, such a demand can be satisfied. From such a viewpoint, the use of PVC as the base material is more effective.

The base material may be subjected to a surface treatment from the viewpoint of improving the surface energy.

Examples of the surface treatment include a corona treatment, a plasma treatment, a flame treatment, a heat treatment, an abrasion treatment, and a light irradiation treatment (UV treatment), but the surface treatment is not limited thereto.

A thickness of the base material is not particularly limited, but is preferably 20 µm to 500 µm from the viewpoint of flexibility.

### <Applying step>

The applying step is a step of applying the above-described ink according to the present disclosure onto the base material by an ink jet recording system.

### (Application conditions and the like for ink)

The application of the ink by an ink jet recording system can be performed by jetting the ink from an ink jet head in a known ink jet recording device.

As the ink jet head, a piezo-type ink jet head is preferable.

A resolution of the ink jet head is preferably 300 dpi or more, more preferably 600 dpi or more, and still more preferably 800 dpi or more.

Here, the dpi (dot per inch) represents the number of dots per 2.54 cm (1 inch).

A liquid droplet volume (amount jetted per dot) of the ink jetted from the ink jet head is preferably 1 pL (picoliter) to 100 pL, more preferably 3 pL to 80 pL, and still more preferably 3 pL to 50 pL.

### (Temperature and the like of base material)

In the applying step, a temperature of a surface of the base material on the side on which the ink is landed is preferably 20°C to 80°C, more preferably 25°C to 75°C, still more preferably 30°C to 70°C, and even more preferably 40°C to 70°C.

In a case where the temperature of the surface of the base material on the side on which the ink is landed is 20°C to 80°C, the image quality and the rub resistance of the image are further improved. The reason for this is considered to be that the effect of bleeding out of the polymerizable compound A from the specific particles is more easily obtained.

### (Heating of base material)

It is preferable that the ink jet recording method according to the present disclosure includes a pre-heating step of heating the base material before the applying step, and at least one of heating the base material or applying the ink is satisfied in the applying step. In a case where at least one of the above-described conditions is satisfied, the temperature of the surface of the base material is easily adjusted to the above-described preferred temperature.

In a case where the base material is heated, the image quality and the rub resistance of the image are further improved. The reason for this is considered to be that the effect of bleeding out of the polymerizable compound A from the specific particles is more easily obtained.

In each of the heating in the pre-heating step and the heating in the applying step, a heating unit for heating the base material is not particularly limited, and examples thereof include a heat drum, hot air, an infrared lamp, an infrared LED, an infrared heater, a heat oven, a hot plate, an infrared laser, and an infrared dryer.

### (Blowing air to base material)

It is preferable that the ink jet recording method according to the present disclosure includes a blowing step of blowing a gas to the applied ink after the applying step. By blowing a gas, the drying of the ink is further advanced, and the image quality and the rub resistance of the image are further improved.

A temperature of the gas to be blown is, for example, 20°C to 60°C.

The blowing of the gas to the applied ink can be performed, for example, using a blower. It is preferable that the blower is installed on a side further above the ink jet head installed on the upper side of the base material. The ink can be dried and the ink jet head can be cooled by the gas blown from the blower.

### <Irradiating step>

The irradiating step is a step of irradiating the ink applied onto the base material with active energy rays (in other words, a step of exposing the ink applied onto the base material).

By the irradiation (that is, the exposure) with active energy rays in the present step, the polymerizable compound A in the ink is polymerized and the ink is cured, thereby obtaining an image. More specifically, as described above, after the ink is landed, the polymerizable compound A effectively bleeds out from the specific particles, and thus the curing between the specific particles (that is, the linking between the specific particles) sufficiently proceeds, and as a result, an image with excellent image quality and rub resistance is obtained.

Examples of the active energy rays include ultraviolet rays (UV light), visible rays, and electron beams, and among these, UV light is preferable as the active energy rays.

The irradiation of the ink applied onto the base material with active energy rays may be performed in a state in which the base material and the ink applied onto the base material are heated. In addition, the irradiation of the ink applied onto the base material with active energy rays may be performed in a state in which the base material and the ink applied onto the base material are heated and a gas is blown to the ink applied onto the base material by a blower.

As irradiation conditions and basic irradiation method of the active energy rays, irradiation conditions and irradiation methods described in JP1985-132767A (JP-S60-132767A) can be adopted.

In the ink jet recording method according to the present disclosure, a time from a moment when the ink is landed to the start of the irradiation with active energy rays is not particularly limited, and is, for example, 0.1 seconds to 1,000 seconds.

The ink application and the irradiation with active energy rays may be performed using an ink jet recording device including a unit which includes an ink jet head and an active energy ray source disposed in the vicinity of the ink jet head.

In addition, in the ink jet recording device, the ink jet head and the active energy ray source may be disposed independently.

In addition, the inkjet recording device may be equipped with a temporary curing light source (pinning light source) and a main curing light source (curing light source). The temporary curing light source is a light source which performs irradiation with active energy rays (preferably, ultraviolet rays) for temporarily curing the ink to an extent that adjacent liquid droplets do not coalesce after the ink droplets jetted from the ink jet head land on the base material. The ink irradiated with active energy rays from the temporary curing light source is temporarily cured to the extent that the dots are developed (can be sufficiently spread), while the landing interference is avoided. The main curing light source is a light source which performs additional exposure after the temporary curing and irradiates the ink with active energy rays (preferably, ultraviolet rays) for completely curing (main curing) the ink.

Examples of the light source for active energy ray irradiation include discharge lamps such as a mercury lamp, a metal halide lamp, a high-pressure mercury lamp, a medium-pressure mercury lamp, a low-pressure mercury lamp, an ultraviolet fluorescent lamp; laser light sources such as a gas laser and a solid-state laser; and semiconductor light sources such as a light emitting diode (LED) and a laser diode (LD).

Among these, as the light source for active energy ray irradiation, a metal halide lamp, a high-pressure mercury lamp, a medium-pressure mercury lamp, a low-pressure mercury lamp, or an ultraviolet LED (hereinafter, also called UV-LED), which is a light source for ultraviolet irradiation, is preferable.

A peak wavelength of the ultraviolet ray is, for example, preferably 200 nm to 405 nm, more preferably 220 nm to 400 nm, and still more preferably 340 nm to 400 nm.

A peak wavelength of the light (LED light) from the LED light source is preferably 200 nm to 600 nm, more preferably 300 nm to 450 nm, still more preferably 320 nm to 420 nm, even more preferably 340 nm to 405 nm, and even still more preferably 355 nm, 365 nm, 385 nm, 395 nm, or 405 nm.

Examples of UV-LED include UV-LED manufactured by NICHIA CORPORATION that has a main emission spectrum having a wavelength between 365 nm and 420 nm.

Examples thereof also include UV-LED described in US6084250B which can emit a radioactive ray centered between 300 nm and 370 nm.

In addition, by combining several UV-LEDs, it is possible to radiate ultraviolet rays in different wavelength ranges.

An irradiation energy (that is, an exposure amount) of the active energy ray is preferably 20 mJ/cm² or more, more preferably 100 mJ/cm² or more, and still more preferably 500 mJ/cm² or more.

The upper limit value of the exposure amount is not particularly limited, and may be 5 J/cm² or 1,500 mJ/cm².

The maximum illuminance of LED on the base material is preferably 10 mW/cm² to 8,000 mW/cm², more preferably 20 mW/cm² to 5,000 mW/cm², still more preferably 30 mW/cm² to 3,000 mW/cm², and even more preferably 50 mW/cm² to 1,000 mW/cm².

The irradiation time of the active energy ray is preferably 0.01 seconds to 120 seconds, and more preferably 0.1 seconds to 90 seconds.

### <Drying step>

It is preferable that the ink jet recording method according to the present disclosure further includes a drying step of heating and drying the ink (that is, the image) irradiated with active energy rays.

In this manner, the rub resistance of the image is further improved, and stickiness of the image is further suppressed.

A heating unit for heating the ink is not particularly limited, and examples thereof include a heat drum, hot air, an infrared lamp, an infrared LED, an infrared heater, a heat oven, a hot plate, an infrared laser, and an infrared dryer.

A heating temperature in the heating and drying is preferably 40°C or higher, more preferably 40°C to 200°C, still more preferably 40°C to 100°C, even more preferably 40°C to 80°C, and even still more preferably 45°C to 70°C.

The heating temperature refers to the temperature of the ink on the base material, and can be measured with a thermograph using an infrared thermography device H2640 (manufactured by Nippon Avionics Co., Ltd.).

A heating time can be appropriately set in consideration of the heating temperature, the formulation of the ink, the printing speed, and the like. The heating time is preferably 5 seconds or more, more preferably 5 seconds to 20 minutes, still more preferably 10 seconds to 10 minutes, and even more preferably 20 seconds to 5 minutes.

### Examples

Hereinafter, the present invention will be described more specifically with reference to examples, but the present invention is not limited to the following examples.

Unless otherwise specified, "room temperature" represents 25°C.

### <Preparation of polymer P>

187.9 g of methyl ethyl ketone, 137.4 g of isophorone diisocyanate, 32.3 g of tricyclodecane dimethanol, 91.8 g of epoxy acrylate (product name "EBECRYL 600", manufactured by Daicel-Allnex Ltd.), 28.8 g of 2,2-bis(hydroxymethyl)propionic acid, 25.3 g of a hydroxy group-containing silicone compound (product name "SILAPLANE FM-DA11", manufactured by JNC Corporation.), and 0.01 g of 2-tert-butyl-1,4-benzoquinone were charged into a 1 L three-neck flask equipped with a stirrer, a thermometer, and a reflux condenser, the temperature was raised to 70°C, and 0.5 g of bismuth tris(2-ethylhexanoate) (product name "NEOSTANN U-600", manufactured by Daicel-Allnex Ltd.) was added thereto. Thereafter, the mixture was stirred for 8 hours while maintaining a temperature in the reaction container at 70°C.

Next, a solution consisting of 64.4 g of methyl ethyl ketone and 221.1 g of 2-propanol was added to the reaction container, and the mixture was stirred for 2 hours. Thereafter, the temperature was lowered to 40°C, and 27.8 g of N,N-diisopropylethylamine was added thereto. Stirring was carried out for 1 hour while maintaining a temperature in the reaction container at 40°C, thereby obtaining a polymer P solution (content of polymer P: 40% by mass).

### [Example 1]

### <Preparation of water dispersion of specific particles>

### -Preparation of oil-phase component-

The following components were mixed and stirred at room temperature for 30 minutes to obtain an oil-phase component.

| | |
|---|---|
| 40% by mass solution of polymer P | 38.7 g |
| Polymerizable compound A | 15.5 g |
| Polymerization initiator: (2,4,6-trimethylbenzoyl)ethoxyphenylphosphine oxide (product name "Omnirad TPO-L", manufactured by IGM Resins B.V.; "TPO-L" in the table) | 2.5 g |
| Sensitizer: isopropylthioxanthone (ITX) | 0.6 g |
| Ethyl acetate | 31.7 g |
| Methyl ethyl ketone | 9.4 g |

### -Preparation of water dispersion of specific particles-

The above-described oil-phase component and 84.6 g of distilled water were mixed, and the obtained mixture was emulsified at 7,000 rpm for 30 minutes using a homogenizer at room temperature to obtain an emulsion.

The obtained emulsion was added to distilled water (30.0 g), and the obtained liquid was heated to 50°C and stirred at 50°C for 4 hours to distill off ethyl acetate and methyl ethyl ketone from the liquid.

The liquid from which the ethyl acetate and methyl ethyl ketone had been distilled off was diluted with distilled water so that a concentration of solid contents was 25% by mass, thereby obtaining a water dispersion of specific particles (content of specific particles: 25% by mass).

A volume average dispersion particle diameter of the specific particles was 100 nm.

### <Preparation of ink>

Each component was mixed to prepare an ink.
· Water dispersion of specific particles described above (content of specific particles: 25% by mass) ... 44 parts by mass
· Black pigment dispersion liquid: product name "Pro-jet Black APD4000", manufactured by FUJIFILM Imaging Colorants Inc., pigment concentration of 15% by mass ... 20 parts by mass
· Surfactant: polyoxyethylene alkyl ether (product name "Emulgen 707", manufactured by Kao Corporation, concentration of solid contents: 100% by mass) ... 0.5 parts by mass
· Water-soluble organic solvent: propylene glycol (PG) ... 10 parts by mass
· Water ... remaining amount such that total amount of the ink reached 100 parts by mass

### [Examples 2 to 16 and Comparative Examples 1 and 2]

An ink was obtained by the same method as in Example 1, except that a polymerizable compound shown in Table 1 or Table 2 was used instead of the bifunctional polyester acrylate.

The details of the polymerizable compound A and other polymerizable compounds shown in Table 1 or Table 2 are as follows.
· Bifunctional polyester acrylate: product name "ARONIX M-6500", manufactured by Toagosei Co., Ltd.
· Bifunctional urethane methacrylamide: compound produced by the following method
   100 g of methyl ethyl ketone, 20.0 g of isophorone diisocyanate, 22.1 g of N-(2-hydroxyethyl) methacrylamide, and 0.01 g of 2-tert-butyl-1,4-benzoquinone were charged into a 500 ml three-neck flask equipped with a stirrer, a thermometer, and a reflux condenser, the temperature was raised to 70°C, and 0.08 g of bismuth tris(2-ethylhexanoate) (product name "NEOSTANN U-600", manufactured by Daicel-Allnex Ltd.) was added thereto. Thereafter, the mixture was stirred for 8 hours while maintaining a temperature in the reaction container at 70°C. Next, 10.0 g of 2-propanol was added to the reaction container, and the mixture was stirred for 2 hours. Thereafter, methyl ethyl ketone and 2-propanol were distilled off by a drying treatment under reduced pressure to obtain urethane methacrylamide.
· Bifunctional urethane acrylate: product name "UN-2601", manufactured by Negami Chemical Industrial Co., Ltd.
· Hexafunctional urethane acrylate: product name "UV-7630B", manufactured by Mitsubishi Chemical Corporation, 70% by mass
· Decafunctional urethane acrylate: product name "MIRAMER SC2153", manufactured by Miwon Specialty Chemical Co., Ltd., 70% by mass
· Trifunctional urethane acrylate: product name "UV-7550B", manufactured by Mitsubishi Chemical Corporation· Bifunctional urethane acrylate (Mw = 3,000): product name "UV-6630B", manufactured by Mitsubishi Chemical Corporation
· Bifunctional urethane acrylate (Mw = 11,000): product name "UV-3520EA", manufactured by Mitsubishi Chemical Corporation
· TriPEA: tripentaerythritol acrylate, mixture of mono- and dipentaerythritol acrylate, and polypentaerythritol acrylate (product name "VISCOAT #802", manufactured by OSAKA ORGANIC CHEMICAL INDUSTRY LTD.)
· TPGDA: tripropylene glycol diacrylate (product name "VISCOAT #310HP", manufactured by OSAKA ORGANIC CHEMICAL INDUSTRY LTD.)
· PETA: pentaerythritol tetraacrylate (product name "UV-7630B", manufactured by Mitsubishi Chemical Corporation, 30% by mass)
· DPHA: dipentaerythritol hexaacrylate (product name "MIRAMER SC2153", manufactured by Miwon Specialty Chemical Co., Ltd., 30% by mass)

As described above, UV-7630B contains 70% by mass of the hexafunctional urethane acrylate and 30% by mass of PETA. In Example 4, UV-7630B was used in a case of preparing the ink. In Example 5, only the hexafunctional urethane acrylate was used as the UV-7630B was purified in advance and the ink was prepared.

As described above, "MIRAMER SC2153" contains 70% by mass of the decafunctional urethane acrylate and 30% by mass of DPHA. In Example 6, "MIRAMER SC2153" was used in a case of preparing the ink.

### <Image recording 1>

An ink cartridge attached to an ink jet recording device (product name "DMP-2850", manufactured by FUJIFILM Corporation) was filled with the above-described ink, and an image was recorded on a base material by the following method.

A polyvinyl chloride (PVC) film (product name "LAG JET P-282ZW", thickness: 80 µm, manufactured by LINTEC Corporation) was used as the base material.

The base material was heated such that the temperature of the surface to which the ink was applied (that is, the surface on which the ink was landed) was 50°C (pre-heating step). The pre-heating was carried out on a platen heater in the ink jet recording device.

The ink was jetted from the ink jet head of the above-described ink jet recording device and applied onto the heated base material (applying step). The ink was jetted under the conditions of 900 dpi (dots per inch) at 10 pL per dot. The application of the ink was carried out while maintaining the heating of the base material, thereby allowing the ink to land on the surface of the base material held at 50°C. The base material was maintained at a high temperature using the platen heater in the ink jet recording device.

Next, the applied ink was dried under the conditions of 50°C and 180 seconds to obtain an ink film (drying step). The ink was dried by bringing a surface of the base material opposite to the ink applied surface into contact with a hot plate.

Finally, the dried ink film was exposed using a conveyor type LED exposure device with an exposure amount of 1,000 mJ/cm², thereby obtaining an image recorded material (irradiating step).

### <Image recording 2>

An ink jet recording device of a multi-pass method (that is, a shuttle scan method) was prepared. A transport roller for transporting the base material was installed, and a platen heater was provided below the transport roller. An ink jet head shown in Fig. 3 of JP2013-78862A was used as an ink jet head. With reference to a printer described in JP2013-166271A, a blower was installed above the ink jet head.

An ink cartridge attached to the ink jet recording device was filled with the above-described ink, and an image was recorded on a base material by the following method.

A polyvinyl chloride (PVC) film (product name "LAG JET P-282ZW", thickness: 80 µm, manufactured by LINTEC Corporation) was used as the base material.

The base material was heated such that the temperature of the surface to which the ink was applied (that is, the surface on which the ink was landed) was 50°C (pre-heating step). The pre-heating was carried out on the platen heater above the upstream side of the ink jet head.

The heated base material was transported, and the ink was jetted from the ink jet head of the above-described ink jet recording device and applied onto the heated base material (applying step). The ink was jetted under the conditions of 900 dpi (dots per inch) at 10 pL per dot, 8 passes, and bidirectional printing. The application of the ink was carried out while turning off a temporary curing light source (32A and 32B in Fig. 3 described in JP2013-78862A), heating the base material on the platen heater, and blowing a gas from a blower installed on the upper part of the ink jet head.

The base material to which the ink was applied was transported to the lower part of a main curing light source (34A and 34B in Fig. 3 described in JP2013-78862A) and exposed with an exposure amount of 1,000 mJ/cm², thereby obtaining an image recorded material (irradiating step). The exposure was carried out while heating the base material on the platen heater and blowing a gas from the blower.

Using the obtained image recorded material, rub resistance and stretchability were evaluated. In addition, storage stability was evaluated using the obtained ink. The evaluation methods were as follows. Evaluation results of the image recorded materials obtained by the image recording 1 and the image recording 2 were the same.

### <Rub resistance>

By the above-described image recording method, an image recorded material in which a rectangular solid image of 10 cm × 3 cm was recorded on the base material at a recording duty of 100% was obtained. The obtained image recorded material was allowed to stand in an environment of 25°C and a relative humidity of 50% for 24 hours.

A cotton cloth (Kanakin No. 3) was placed on the image recorded surface of the image recorded material after being left to stand, and the image recorded material was rubbed 100 times with a load of 200 g using a JSPS-type friction tester (manufactured by TESTER SANGYO CO., LTD.). The image recording surface after the rubbing was visually observed, and a peeling state of the rub mark in the image was confirmed. The evaluation standard was as follows. Evaluations 3, 4, and 5 are levels which do not cause any problems in practical use.
5: no rub mark was found on the image.
4: rub mark was found on the image, but the rub mark did not reach the base material.
3: rub mark was left on the image and a part of the rub mark reached the base material, but the area of the base material which was visible was more than 0% and less than 5% of the area (30 cm²) of the image at the beginning of the recording.
2: rub mark was left on the image and a part of the rub mark reached the base material, and the area of the base material which was visible was 5% or more and less than 50% of the area (30 cm²) of the image at the beginning of the recording.
1: rub mark was left on the image and a part of the rub mark reached the base material, and the area of the base material which was visible was 50% or more of the area (30 cm²) of the image at the beginning of the recording.

### <Stretchability>

By the above-described image recording method, an image recorded material in which a rectangular solid image of 10 cm × 3 cm was recorded on the base material at a recording duty of 100% was obtained. The obtained image recorded material was allowed to stand in an environment of 25°C and a relative humidity of 50% for 24 hours.

An image density of the image recorded material after being left to stand (that is, the image recorded material before stretching) was measured using a fluorescence spectrophotometer (product name "FD-7", manufactured by Konica Minolta, Inc.).

The image recorded material after being left to stand was set using a tensile tester (product name "AUTOGRAPH AG-IS 5 kN type", manufactured by Shimadzu Corporation) such that a distance between grips was 5 cm, and the image recorded material was stretched until the distance between the grips was 13 cm under the condition of a stretching speed of 300 mm/min.

An image density of the image recorded material after the stretching was measured in the same manner as the image density of the image recorded material before stretching. In addition, the image recorded material after the stretching was visually observed to check the presence or absence of breakage. The stretchability was evaluated based on the amount of change between the image density of the image recorded material after the stretching and the image density of the image recorded material before the stretching, and the presence or absence of breakage. The evaluation standard was as follows. Evaluations 3, 4, and 5 are levels which do not cause any problems in practical use.

Amount of change in image density before and after stretching = Image density of image recorded material before stretching - Image density of image recorded material after stretching
5: no image breakage was observed after the stretching, and the amount of change in image density before and after the stretching was less than 0.5.
4: no image breakage was observed after the stretching, and the amount of change in image density before and after the stretching was 0.5 or more and less than 0.8.
3: no image breakage was observed after the stretching, and the amount of change in image density before and after the stretching was 0.8 or more and less than 1.1.
2: no image breakage was observed after the stretching, but the amount of change in image density before and after the stretching was 1.1 or more.
1: image breakage was observed after the stretching.

### <Storage stability>

An average particle diameter of the ink (that is, an ink before a storage test) was measured within 12 hours after the preparation of the ink. The average particle diameter of the ink was measured at a temperature of 25°C using a particle diameter measuring device (product name "nanoSAQLA", manufactured by Otsuka Electronics Co., Ltd.).

As the storage test, an airtight container containing the ink was placed in a constant-temperature chamber at 60°C and left for 1 week. After 1 week, an average particle diameter of the ink after the storage test was measured by the same method as the average particle diameter of the ink before the storage test. The storage stability was evaluated based on the amount of change between the average particle diameter of the ink before the storage test and the average particle diameter of the ink after the storage test. The evaluation standard was as follows. Evaluations 3, 4, and 5 are levels which do not cause any problems in practical use.
5: absolute value of the amount of change in average particle diameter before and after the storage test was less than 5 nm.
4: absolute value of the amount of change in average particle diameter before and after the storage test was 5 nm or more and less than 10 nm.
3: absolute value of the amount of change in average particle diameter before and after the storage test was 10 nm or more and less than 20 nm.
2: absolute value of the amount of change in average particle diameter before and after the storage test was 20 nm or more.
1: ink after the storage test contained a precipitate, and the measurement was not able to be performed.

The evaluation results are shown in Tables 1 and 2.

**[Table 1]**

| | | Type | Mw | Example 1 | Example 2 | Example 3 | Example 4 | Example 5 | Example 6 | Example 7 | Example 8 | Example 9 |
|---|---|---|---|---|---|---|---|---|---|---|---|---|
| Polymer P | | | | 5 | 5 | 5 | 5 | 5 | 5 | 5 | 5 | 5 |
| Polymerizable compound A | | Bifunctional polyester acrylate | 1600 | 5 | - | - | - | - | - | - | - | - |
| | | Bifunctional urethane methacrylamide | 1500 | - | 5 | - | - | - | - | - | - | - |
| | | Bifunctional urethane acrylate | 1600 | - | - | 5 | - | - | - | - | - | - |
| | Polymerizable compound Al | Hexafunctional urethane acrylate | 2200 | - | - | - | 5 | 5 | - | - | - | - |
| | | Decafunctional urethane acrylate | 2000 | - | - | - | - | - | 5 | - | - | - |
| | Polymerizable compound A2 | Trifunctional urethane acrylate | 2400 | - | - | - | - | - | - | 5 | - | - |
| | | Bifunctional urethane acrylate | 3000 | - | - | - | - | - | - | - | 5 | - |
| | | Bifunctional urethane acrylate | 11000 | - | - | - | - | - | - | - | - | 5 |
| Other polymerizable compounds | | PETA | 352 | - | - | - | 2.1 | - | - | - | - | - |
| | | DPHA | 578 | - | - | - | - | - | 2.1 | - | - | - |
| Polymerization initiator | | TPO-L | | 0.8 | 0.8 | 0.8 | 0.8 | 0.8 | 0.8 | 0.8 | 0.8 | 0.8 |
| Sensitizer | | ITX | | 0.2 | 0.2 | 0.2 | 0.2 | 0.2 | 0.2 | 0.2 | 0.2 | 0.2 |
| Surfactant | | Polyoxyethylene alkyl ether | | 0.5 | 0.5 | 0.5 | 0.5 | 0.5 | 0.5 | 0.5 | 0.5 | 0.5 |
| Water-soluble organic solvent | | PG | | 10 | 10 | 10 | 10 | 10 | 10 | 10 | 10 | 10 |
| Pigment dispersing agent | | | | 1.2 | 1.2 | 1.2 | 1.2 | 1.2 | 1.2 | 1.2 | 1.2 | 1.2 |
| Pigment | | | | 3 | 3 | 3 | 3 | 3 | 3 | 3 | 3 | 3 |
| Water | | | | Remainder | Remainder | Remainder | Remainder | Remainder | Remainder | Remainder | Remainder | Remainder |
| Polymerizable compound A1/(polymerizable compound A1 + polymerizable compound A2) | | | | - | - | - | - | - | - | - | - | - |
| Polymerizable compound A/(polymer P + polymerizable compound A) | | | | 0.5 | 0.5 | 0.5 | 0.5 | 0.5 | 0.5 | 0.5 | 0.5 | 0.5 |
| Amount of acrylic acid after storage test (% by mass) | | | | 0.03 | < 0.01 | 0.03 | 0.12 | 0.03 | 0.04 | 0.03 | 0.03 | 0.03 |
| Evaluation | Rub resistance | | | 3 | 3 | 4 | 5 | 5 | 5 | 4 | 4 | 4 |
| | Stretchability | | | 3 | 3 | 3 | 3 | 3 | 3 | 4 | 4 | 5 |
| | Storage stability | | | 5 | 5 | 5 | 3 | 5 | 5 | 5 | 5 | 5 |

**[Table 2]**

| | | Type | Mw | Example 10 | Example 11 | Example 12 | Example 13 | Example 14 | Example 15 | Example 16 | Comparative Example 1 | Comparative Example 2 |
|---|---|---|---|---|---|---|---|---|---|---|---|---|
| Polymer P | | | | 5 | 5 | 5 | 5 | 5 | 3 | 7 | 5 | 5 |
| Polymerizable compound A | Polymerizable compound A1 | Decafunctional urethane acrylate | 2000 | 2.5 | 4.0 | 4.5 | 1.0 | 0.5 | 3.5 | 1.5 | - | - |
| | Polymerizable compound A2 | Bifunctional urethane acrylate | 11000 | 2.5 | 1.0 | 0.5 | 4.0 | 4.5 | 3.5 | 1.5 | - | - |
| Other polymerizable compounds | | TriPEA | 805 | - | - | - | - | - | - | - | 5 | - |
| | | TPGDA | 300 | - | - | - | - | - | - | - | - | 5 |
| | | DPHA | 578 | 1.1 | 1.7 | 1.9 | 0.4 | 0.2 | 1.5 | 0.6 | - | - |
| Polymerization initiator | | TPO-L | | 0.8 | 0.8 | 0.8 | 0.8 | 0.8 | 0.8 | 0.8 | 0.8 | 0.8 |
| Sensitizer | | ITX | | 0.2 | 0.2 | 0.2 | 0.2 | 0.2 | 0.2 | 0.2 | 0.2 | 0.2 |
| Surfactant | | Polyoxyethylene alkyl ether | | 0.5 | 0.5 | 0.5 | 0.5 | 0.5 | 0.5 | 0.5 | 0.5 | 0.5 |
| Water-soluble organic solvent | | PG | | 10 | 10 | 10 | 10 | 10 | 10 | 10 | 10 | 10 |
| Pigment dispersing agent | | | | 1.2 | 1.2 | 1.2 | 1.2 | 1.2 | 1.2 | 1.2 | 1.2 | 1.2 |
| Pigment | | | | 3 | 3 | 3 | 3 | 3 | 3 | 3 | 3 | 3 |
| Water | | | | Remainder | Remainder | Remainder | Remainder | Remainder | Remainder | Remainder | Remainder | Remainder |
| Polymerizable compound Al/(polymerizable compound A1 + polymerizable compound A2) | | | | 0.5 | 0.8 | 0.9 | 0.2 | 0.1 | 0.5 | 0.5 | - | - |
| Polymerizable compound A/(polymer P + polymerizable compound A) | | | | 0.5 | 0.5 | 0.5 | 0.5 | 0.5 | 0.7 | 0.3 | 0.5 | 0.5 |
| Amount of acrylic acid after storage test (% by mass) | | | | 0.03 | 0.04 | 0.04 | 0.03 | 0.03 | 0.03 | 0.03 | 0.2 | 0.3 |
| Evaluation | Rub resistance | | | 5 | 5 | 5 | 5 | 4 | 5 | 5 | 3 | 3 |
| | Stretchability | | | 5 | 5 | 4 | 5 | 5 | 5 | 5 | 1 | 1 |
| | Storage stability | | | 5 | 5 | 5 | 5 | 5 | 5 | 5 | 2 | 1 |

As shown in Table 1, in Examples 1 to 16, since water and the particles containing the polymer P having an acid group and the polymerizable compound A were contained, and the polymerizable compound A had two or more ethylenically unsaturated groups in one molecule and had a weight-average molecular weight of 1,000 or more, it was found that an image having excellent rub resistance and stretchability was obtained.

On the other hand, in Comparative Examples 1 and 2, since the polymerizable compound A was not contained in the particles, both the rub resistance and the stretchability of the image could not be achieved.

In Example 3, it was found that the polymerizable compound A was a urethane (meth)acrylate having two or more (meth)acryloyl groups in one molecule, and thus the rub resistance was excellent as compared with Examples 1 and 2.

In Example 5, it was found that the polymerizable compound A1 having six or more ethylenically unsaturated groups in one molecule was contained, and thus the rub resistance was excellent as compared with Example 3.

In Example 8, it was found that the polymerizable compound A2 having two or three ethylenically unsaturated groups in one molecule and having a weight-average molecular weight of 2,000 or more was contained, and thus the stretchability was excellent as compared with Example 3.

In Example 9, it was found that the polymerizable compound having two ethylenically unsaturated groups in one molecule and having a weight-average molecular weight of 4,000 or more was contained, and thus the stretchability was excellent as compared with Example 8.

In Example 10, it was found that the polymerizable compound A1 and the polymerizable compound A2 were contained, and thus the rub resistance was excellent as compared with Example 9.

In Example 11, it was found that the ratio of the content of the polymerizable compound A1 to the total content of the polymerizable compound A1 and the polymerizable compound A2 was 0.8 or less, and thus the stretchability was excellent as compared with Example 12. In addition, in Example 13, it was found that the ratio of the content of the polymerizable compound A1 to the total content of the polymerizable compound A1 and the polymerizable compound A2 was 0.2 or more, and thus the rub resistance was excellent as compared with Example 14.

In Example 5, it was found that the content of (meth)acrylic acid contained in the ink jet ink after the storage test was 0.1% by mass or less, and thus the storage stability was excellent as compared with Example 4.

### [Examples 17 to 22]

An ink was obtained by the same method as in Example 1, except that the components shown in Table 3 were used.

The details of the polymerizable compound B and other polymerizable compounds shown in Table 3 are as follows.
· Dicyclopentenyloxyethyl acrylate (product name "FA-512AS", manufactured by Resonac Holdings Corporation.)
· m-Phenoxybenzyl acrylate (product name "POB-A", manufactured by KYOEISHA CHEMICAL Co., LTD.)
· Ethoxylated-o-phenylphenol acrylate (product name "A-LEN-10", manufactured by Shin-Nakamura Chemical Co., Ltd.)
· LA: lauryl acrylate (product name "LA", manufactured by OSAKA ORGANIC CHEMICAL INDUSTRY LTD.)

An image recorded material was obtained by the same method as in the image recording 1 and the image recording 2 described above, using the obtained ink.

Using the obtained image recorded material, rub resistance and stretchability were evaluated. In addition, storage stability was evaluated using the obtained ink. The evaluation methods for the rub resistance, the stretchability, and the storage stability are as described above.

Furthermore, jetting stability was evaluated using the obtained ink. The evaluation method was as follows. Evaluation results of the image recorded materials obtained by the image recording 1 and the image recording 2 were the same.

The ink was jetted under the conditions described in the image recording 2 above. Before the start of image recording, a nozzle check pattern was printed to confirm that there was no non-jetting nozzle. Thereafter, an image having a size of 1 m × 5 m and an image density of 5% was recorded. Again, the nozzle check pattern was printed. The number of non-jetting nozzles was counted from the nozzle check pattern after the printing, and the jetting stability was evaluated. The evaluation standard was as follows. Evaluations 3, 4, and 5 are levels which do not cause any problems in practical use.
5: there was no non-jetting nozzle.
4: number of non-jetting nozzles was 1 or 2.
3: number of non-jetting nozzles was 3 to 5.
2: number of non-jetting nozzles was 6 or more, which was less than 20% of all the nozzles.
1: number of non-jetting nozzles was 6 or more, which was 20% or more of all the nozzles.

The evaluation results are shown in Table 3.

**[Table 3]**

| | | Type | Mw | Example 10 | Example 17 | Example 18 | Example 19 | Example 20 | Example 21 | Example 22 |
|---|---|---|---|---|---|---|---|---|---|---|
| Polymer P | | | | 5 | 5 | 5 | 5 | 5 | 5 | 5 |
| Polymerizable compound A | Polymerizable compound A1 | Decafunctional urethane acrylate | 2000 | 2.5 | 1.8 | 1.8 | 1.8 | 1.8 | 2.2 | 1.1 |
| | Polymerizable compound A2 | Bifunctional urethane acrylate | 11000 | 2.5 | 1.8 | 1.8 | 1.8 | 1.8 | 2.2 | 1.1 |
| Polymerizable compound B | | Dicyclopentenyloxyethyl acrylate | 248 | - | - | 1.4 | - | - | - | - |
| | | m-Phenoxybenzyl acrylate | 254 | - | - | - | 1.4 | - | - | - |
| | | Ethoxylated-o-phenylphenol acrylate | 238 | - | - | - | - | 1.4 | 0.6 | 2.8 |
| Other polymerizable compounds | | LA | 240 | - | 1.4 | - | - | - | - | - |
| | | DPHA | 578 | 1.1 | 0.8 | 0.8 | 0.8 | 0.8 | 0.9 | 0.5 |
| Polymerization initiator | | TPO-L | | 0.8 | 0.8 | 0.8 | 0.8 | 0.8 | 0.8 | 0.8 |
| Sensitizer | | ITX | | 0.2 | 0.2 | 0.2 | 0.2 | 0.2 | 0.2 | 0.2 |
| Surfactant | | Polyoxyethylene alkyl ether | | 0.5 | 0.5 | 0.5 | 0.5 | 0.5 | 0.5 | 0.5 |
| Water-soluble organic solvent | | PG | | 10 | 10 | 10 | 10 | 10 | 10 | 10 |
| Pigment dispersing agent | | | | 1.2 | 1.2 | 1.2 | 1.2 | 1.2 | 1.2 | 1.2 |
| Pigment | | | | 3 | 3 | 3 | 3 | 3 | 3 | 3 |
| Polymerizable compound A1/(polymerizable compound A1 + polymerizable compound A2) | | | | 0.5 | 0.5 | 0.5 | 0.5 | 0.5 | 0.5 | 0.5 |
| Polymerizable compound A/(polymer P + polymerizable compound A) | | | | 0.5 | 0.42 | 0.42 | 0.42 | 0.42 | 0.47 | 0.31 |
| Polymerizable compound B/(polymerizable compound A + polymerizable compound B) | | | | - | - | 0.28 | 0.28 | 0.28 | 0.12 | 0.56 |
| Evaluation | Rub resistance | | | 5 | 3 | 4 | 5 | 5 | 5 | 4 |
| | Stretchability | | | 5 | 5 | 5 | 5 | 5 | 5 | 5 |
| | Storage stability | | | 5 | 5 | 5 | 5 | 5 | 5 | 5 |
| | Jetting stability | | | 3 | 5 | 5 | 5 | 5 | 4 | 5 |

As shown in Table 3, in Examples 17 to 22, since water and the particles containing the polymer P having an acid group and the polymerizable compound A were contained, and the polymerizable compound A had two or more ethylenically unsaturated groups in one molecule and had a weight-average molecular weight of 1,000 or more, it was found that an image having excellent rub resistance and stretchability was obtained.

In addition, in Example 21, since the polymerizable compound B was contained, it was found that the jetting stability was excellent as compared with Example 10.

Furthermore, in Examples 18 to 20, it was found that the ratio of the content of the polymerizable compound B to the total content of the polymerizable compound A and the polymerizable compound B was 0.2 or more, and thus the jetting stability was excellent as compared with Example 21. In addition, in Examples 18 to 20, it was found that the ratio of the content of the polymerizable compound B to the total content of the polymerizable compound A and the polymerizable compound B was 0.5 or less, and thus the rub resistance was excellent as compared with Example 22.

## Claims

1. An inkjet ink, comprising:
water; and
particles which contain a polymer P having an acid group and a polymerizable compound A,
wherein the polymerizable compound A has two or more ethylenically unsaturated groups in one molecule, and has a weight-average molecular weight of 1000 or more.

2. The ink jet ink according to claim 1, wherein the ethylenically unsaturated group is a (meth)acryloyl group.

3. The ink jet ink according to claim 1, wherein the polymerizable compound A is a urethane (meth)acrylate having two or more (meth)acryloyl groups in one molecule.

4. The ink jet ink according to claim 1, wherein the polymerizable compound A includes a polymerizable compound A1 having six or more ethylenically unsaturated groups in one molecule.

5. The ink jet ink according to claim 4, wherein the polymerizable compound A1 has ten or more ethylenically unsaturated groups in one molecule.

6. The ink jet ink according to claim 1, wherein the polymerizable compound A includes a polymerizable compound A2 having two or three ethylenically unsaturated groups in one molecule and having a weight-average molecular weight of 2000 or more.

7. The ink jet ink according to claim 6, wherein the polymerizable compound A2 has two ethylenically unsaturated groups in one molecule and has a weight-average molecular weight of 4000 or more.

8. The ink jet ink according to claim 1, wherein the polymerizable compound A includes a polymerizable compound A1 having six or more ethylenically unsaturated groups in one molecule, and a polymerizable compound A2 having two or three ethylenically unsaturated groups in one molecule and having a weight-average molecular weight of 2000 or more.

9. The ink jet ink according to claim 8, wherein a ratio of a content of the polymerizable compound A1 to a total content of the polymerizable compound A1 and the polymerizable compound A2 is from 0.2 to 0.8.

10. The ink jet ink according to claim 1, wherein a ratio of a content of the polymerizable compound A to a total content of the polymer P having an acid group and the polymerizable compound A is from 0.3 to 0.7.

11. The ink jet ink according to claim 1, wherein the particles further contain a polymerizable compound B which is a monofunctional polymerizable compound having a ring structure.

12. The ink jet ink according to claim 11, wherein a ratio of a content of the polymerizable compound B to a total content of the polymerizable compound A and the polymerizable compound B is from 0.2 to 0.5.

13. The ink jet ink according to claim 1, wherein a content of (meth)acrylic acid contained in the ink jet ink after a storage test is 0.1% by mass or less, as determined by a method disclosed in the description.

14. An ink jet recording method, comprising:
a step of applying the ink jet ink according to any one of claims 1 to 13 onto a base material by an ink jet recording system; and
a step of irradiating the ink jet ink applied onto the base material with an active energy ray.

## Patentansprüche

1. Tintenstrahltinte, umfassend:
Wasser; und
Partikel, die ein Polymer P, das eine Säuregruppe aufweist, und eine polymerisierbare Verbindung A enthalten,
wobei die polymerisierbare Verbindung A zwei oder mehr ethylenisch ungesättigte Gruppen in einem Molekül aufweist und ein gewichtsmittleres Molekulargewicht von 1000 oder mehr aufweist.

2. Tintenstrahltinte nach Anspruch 1, wobei die ethylenisch ungesättigte Gruppe eine (Meth)acryloylgruppe ist.

3. Tintenstrahltinte nach Anspruch 1, wobei die polymerisierbare Verbindung A ein Urethan(meth)acrylat ist, das zwei oder mehr (Meth)acryloylgruppen in einem Molekül aufweist.

4. Tintenstrahltinte nach Anspruch 1, wobei die polymerisierbare Verbindung A eine polymerisierbare Verbindung A1 enthält, die sechs oder mehr ethylenisch ungesättigte Gruppen in einem Molekül aufweist.

5. Tintenstrahltinte nach Anspruch 4, wobei die polymerisierbare Verbindung A1 zehn oder mehr ethylenisch ungesättigte Gruppen in einem Molekül aufweist.

6. Tintenstrahltinte nach Anspruch 1, wobei die polymerisierbare Verbindung A eine polymerisierbare Verbindung A2 enthält, die zwei oder drei ethylenisch ungesättigte Gruppen in einem Molekül aufweist und ein gewichtsmittleres Molekulargewicht von 2000 oder mehr aufweist.

7. Tintenstrahltinte nach Anspruch 6, wobei die polymerisierbare Verbindung A2 zwei ethylenisch ungesättigte Gruppen in einem Molekül aufweist und ein gewichtsmittleres Molekulargewicht von 4000 oder mehr aufweist.

8. Tintenstrahltinte nach Anspruch 1, wobei die polymerisierbare Verbindung A eine polymerisierbare Verbindung A1, die sechs oder mehr ethylenisch ungesättigte Gruppen in einem Molekül aufweist, und eine polymerisierbare Verbindung A2, die zwei oder drei ethylenisch ungesättigte Gruppen in einem Molekül aufweist und ein gewichtsmittleres Molekulargewicht von 2000 oder mehr aufweist, enthält.

9. Tintenstrahltinte nach Anspruch 8, wobei ein Verhältnis eines Gehalts der polymerisierbaren Verbindung A1 zu einem Gesamtgehalt der polymerisierbaren Verbindung A1 und der polymerisierbaren Verbindung A2 von 0,2 bis 0,8 beträgt.

10. Tintenstrahltinte nach Anspruch 1, wobei ein Verhältnis eines Gehalts der polymerisierbaren Verbindung A zu einem Gesamtgehalt des Polymers P, das eine Säuregruppe aufweist, und der polymerisierbaren Verbindung A von 0,3 bis 0,7 beträgt.

11. Tintenstrahltinte nach Anspruch 1, wobei die Partikel ferner eine polymerisierbare Verbindung B enthalten, die eine monofunktionelle polymerisierbare Verbindung mit einer Ringstruktur ist.

12. Tintenstrahltinte nach Anspruch 11, wobei ein Verhältnis eines Gehalts der polymerisierbaren Verbindung B zu einem Gesamtgehalt der polymerisierbaren Verbindung A und der polymerisierbaren Verbindung B von 0,2 bis 0,5 beträgt.

13. Tintenstrahltinte nach Anspruch 1, wobei ein Gehalt an (Meth)acrylsäure, der in der Tintenstrahltinte nach einem Lagerungstest enthalten ist, 0,1 Massen-% oder weniger beträgt, wie durch ein in der Beschreibung offenbartes Verfahren bestimmt.

14. Tintenstrahl-Aufzeichnungsverfahren, umfassend:
einen Schritt des Aufbringens der Tintenstrahltinte nach einem der Ansprüche 1 bis 13 auf ein Basismaterial durch ein Tintenstrahl-Aufzeichnungssystem; und
einen Schritt des Bestrahlens der auf das Basismaterial aufgebrachten Tintenstrahltinte mit einem Strahl aktiver Energie.

## Revendications

1. Encre à jet d'encre comprenant :
de l'eau ; et
des particules qui contiennent un polymère P ayant un groupe acide et un composé polymérisable A,
dans laquelle le composé polymérisable A a deux ou plusieurs groupes éthyléniquement insaturés dans une molécule, et a un poids moléculaire moyen en poids de 1 000 ou plus.

2. Encre pour jet d'encre selon la revendication 1, dans laquelle le groupe éthyléniquement insaturé est un groupe (méth)acryloyle.

3. Encre pour jet d'encre selon la revendication 1, dans laquelle le composé polymérisable A est un uréthanne (méth)acrylate ayant deux groupes (méth)acryloyle ou plus dans une molécule.

4. Encre pour jet d'encre selon la revendication 1, dans laquelle le composé polymérisable A inclut un composé polymérisable A1 ayant six groupes éthyléniquement insaturés ou plus dans une molécule.

5. Encre pour jet d'encre selon la revendication 4, dans laquelle le composé polymérisable A1 a dix groupes éthyléniquement insaturés ou plus dans une molécule.

6. Encre pour jet d'encre selon la revendication 1, dans laquelle le composé polymérisable A inclut un composé polymérisable A2 ayant deux ou trois groupes éthyléniquement insaturés dans une molécule et ayant un poids moléculaire moyen en poids de 2 000 ou plus.

7. Encre pour jet d'encre selon la revendication 6, dans laquelle le composé polymérisable A2 a deux groupes éthyléniquement insaturés dans une molécule et a un poids moléculaire moyen en poids de 4 000 ou plus.

8. Encre pour jet d'encre selon la revendication 1, dans laquelle le composé polymérisable A inclut un composé polymérisable A1 ayant six groupes éthyléniquement insaturés ou plus dans une molécule, et un composé polymérisable A2 ayant deux ou trois groupes éthyléniquement insaturés dans une molécule et ayant un poids moléculaire moyen en poids de 2 000 ou plus.

9. Encre pour jet d'encre selon la revendication 8, dans laquelle un rapport entre une teneur en composé polymérisable A1 et une teneur total en composé polymérisable A1 et en composé polymérisable A2 est de 0,2 à 0,8.

10. Encre pour jet d'encre selon la revendication 1, dans laquelle un rapport entre une teneur en composé polymérisable A et une teneur total en polymère P ayant un groupe acide et en composé polymérisable A est de 0,3 à 0,7.

11. Encre pour jet d'encre selon la revendication 1, dans laquelle les particules contiennent en outre un composé polymérisable B qui est un composé polymérisable monofonctionnel ayant une structure cyclique.

12. Encre pour jet d'encre selon la revendication 11, dans laquelle un rapport entre une teneur en composé polymérisable B et une teneur total en composé polymérisable A et en composé polymérisable B est de 0,2 à 0,5.

13. Encre pour jet d'encre selon la revendication 1, dans laquelle une teneur en acide (méth)acrylique contenue dans l'encre pour jet d'encre après un test de stockage est de 0,1 % en masse ou moins, telle que déterminé par une méthode divulguée dans la description.

14. Procédé d'enregistrement à jet d'encre, comprenant :
une étape consistant à appliquer l'encre pour jet d'encre selon l'une quelconque des revendications 1 à 13 sur un matériau de base à l'aide d'un système d'enregistrement à jet d'encre ; et
une étape consistant à irradier l'encre pour jet d'encre appliquée sur le matériau de base avec un rayon d'énergie active.
